(19) Europäisches Patentamt
European Patent Office
Office européen des brevets

(11) **EP 4 477 491 B1**

(12) **EUROPEAN PATENT SPECIFICATION**

(45) Date of publication and mention
of the grant of the patent:
**24.06.2026 Bulletin 2026/26**

(21) Application number: **24180327.9**

(22) Date of filing: **05.06.2024**

(51) International Patent Classification (IPC):
**B61D 27/00** (2006.01)   **B60H 1/00** (2006.01)

(52) Cooperative Patent Classification (CPC):
**B61D 27/0018; B60H 1/00207; B60H 1/00735;**
**B60H 1/00785; B60H 1/00907; B60H 1/00978;**
B60H 2001/00235; B60H 2001/3245;
B60H 2001/3258; B60H 2001/3261

(54) **RAIL VEHICLE AIR-CONDITIONING APPARATUS**

SCHIENENFAHRZEUGKLIMAANLAGE

APPAREIL DE CLIMATISATION DE VÉHICULE FERROVIAIRE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **14.06.2023 JP 2023097453**

(43) Date of publication of application:
**18.12.2024 Bulletin 2024/51**

(73) Proprietor: **Hitachi, Ltd.**
**Tokyo 100-8280 (JP)**

(72) Inventors:
• **TOYODA, Hiroyuki**
**Tokyo 100-8280 (JP)**

• **KAWASAKI, Akinori**
**Tokyo 100-8280 (JP)**
• **AKIMARU, Daisuke**
**Tokyo 100-8280 (JP)**

(74) Representative: **Mewburn Ellis LLP**
**Aurora Building**
**Counterslip**
**Bristol BS1 6BX (GB)**

(56) References cited:
**WO-A1-2012/168971      JP-A- 2012 126 351**
**JP-A- 2016 124 461      US-A1- 2019 137 199**

**Description**

Technical Field

The present invention relates to a rail vehicle air-conditioning apparatus.

Background Art

PTL 1 discloses an example of a technique for providing a bathroom heating and drying apparatus that can distinguish and detect an abnormality of a filter due to clogging and an abnormality of a heat exchanger due to clogging.
The technique described in PTL 1 is a technique in which in the bathroom heating and drying apparatus including a heat exchanger through which a heat medium heated by a heat source unit flows, a filter attached to an intake port of air in a bathroom, and a circulation fan that has a fan motor and that circulates air heated by the heat exchanger in the bathroom, a state where heat exchange performance is equal to or lower than a certain level is detected from a temperature difference between a first temperature sensor that is provided on a heat medium inlet side of the heat exchanger and that detects a temperature of the heat medium and a second temperature sensor that is provided on a heat medium outlet side of the heat exchanger and that detects a temperature of the heat medium. In a state where feedback control is performed to control a rotation speed of the circulation fan such that an airflow rate becomes a predetermined value, it is determined that the filter is clogged in a case where fan electric power greatly increases with respect to a normal value, and it is determined that the heat exchanger is clogged in a case where an increase in the fan electric power is small.
On the other hand, PTL 2 discloses an example of a technique related to failure diagnosis on a railway vehicle air-conditioning apparatus.
The technique described in PTL 2 is a technique in which an amount of heat exchanged through a heat exchanger is obtained from an enthalpy difference between an inlet and an outlet of air passing through the heat exchanger and an airflow rate calculated from an operating electric current value of a fan, and in which failure is determined based on whether the obtained value falls within a normal range. When it is determined that there is failure, the factors can be isolated by a combination of fan electric power, a refrigerant pressure, and a change in a refrigerant temperature parameter.
PTL 3 proposes an air conditioner for a vehicle, for efficiently attracting and removing iron powder invading a wind path.

Citation List

Patent Literature

> PTL 1: JP 2021-156469 A
> PTL 2: JP 5787604 B2
> PTL 3: JP 2012-126351 A

Summary of Invention

Technical Problems

In a railway vehicle air-conditioning apparatus, a refrigerant flowing through a heat exchanger is typically in a two-phase state in which liquid and gas are simultaneously present. In a case where the heat exchanger is an evaporator, liquid is evaporated and gasified, and in a case where the heat exchanger is a condenser, gas is condensed and liquefied. In this heat exchange in the two-phase state, a change in temperature of the refrigerant hardly occurs unless a change occurs in the internal pressure. Thus, it may be difficult to accurately grasp an amount of heat exchanged, from a difference in refrigerant temperature between the inlet and outlet of the heat exchanger.
In some railway vehicle air-conditioning apparatuses, a sensor for measuring an airflow rate may not be incorporated, thereby not performing feedback control for controlling a rotation speed such that the airflow rate becomes a predetermined value. In addition, electric power for driving a fan changes depending on an airflow rate, an increased pressure amount, and fan efficiency. The fan efficiency changes depending on the airflow rate, and there is a fan in which the airflow rate cannot be identified even if the electric power for driving the fan is known.
In a railway vehicle air-conditioning apparatus, typically, when dust is accumulated on a filter, a heat exchanger, or both, airflow resistance increases, and the airflow rate decreases accordingly. Typically, when the fan efficiency is constant, the electric power for driving the fan is determined by the product of the airflow rate and the increased pressure amount. However, since the airflow rate decreases while the pressure loss increases, the electric power for driving the fan may not change significantly even if the airflow rate decreases. In addition, since the fan efficiency also changes, the electric power for driving the fan may increase even though the airflow rate of the fan decreases.

Therefore, in the railway vehicle air-conditioning apparatus, there is a case where a decrease in an airflow rate cannot be detected by using the technique disclosed in PTL 1, and it is presumed that it is difficult to distinctively determine dust clogging of the heat exchanger and dust clogging of the filter.

Also in the technique of PTL 2, an electric current for driving the fan is used for the detection of the decrease in the airflow rate and the detection of the dust clogging of the heat exchanger. However, it is presumed that the detection cannot be achieved when a correlation between the electric current for driving the fan and the airflow rate of the fan cannot be obtained.

In addition, there is also a conventional technique in which deposition of dust on a filter is detected by measuring a differential pressure across the filter with a differential pressure gauge. However, such a conventional technique also requires control for keeping a flow rate of passing air constant or a device for detecting an airflow rate. Further, in a case where a filter is designed to be replaceable from the vehicle interior side in a railway vehicle air conditioning, the installation of a differential pressure gauge may cause a decrease in replaceability. Additionally, the differential pressure gauge may be designed separately from the air-conditioning apparatus. Thus, information connectivity with the heat exchanger is not always ensured. That is, when it is desired to obtain the differential pressure information of the filter on the air-conditioning apparatus side, and/or when the differential pressure sensor is not incorporated in the design on the filter side or even when the differential pressure sensor is incorporated in the design on the filter side, it may be necessary to separately design communication between apparatuses in order to share the information with the heat exchanger.

Therefore, there can naturally occur a demand for measuring the differential pressure at the heat exchanger, which is a significant factor in pressure loss in the air-conditioning apparatus, rather than obtaining the differential pressure information of the filter, in order to accurately detect clogging of the filter. However, when the heat exchanger is used as an evaporator, the differential pressure across the heat exchanger changes not only in accordance with a change in an airflow rate but also in accordance with the amount and state of dew condensation water adhering to the surface of the heat exchanger. Therefore, even when a flow rate of passing air is known, it is difficult to determine whether the increase in pressure loss at that time is caused by dust or dew condensation.

The invention has been made in view of the above problems, and an object of the invention is to provide a rail vehicle air-conditioning apparatus capable of performing detection as to an increase in pressure loss caused due to dust clogging of a heat exchanger and dust clogging of a filter while distinguishing locations thereof when the heat exchanger and the filter are disposed on the same flow path.

Solution to Problems

In order to solve the above problems, one of typical rail vehicle air-conditioning apparatuses according to the invention is achieved by including:

a refrigeration cycle in which an outdoor-side heat exchanger, a compressor, and an indoor-side heat exchanger are connected by a pipe, and in which a refrigerant is adapted to pass through the pipe;
a filter installed on an upstream side of the indoor-side heat exchanger in an air flow direction;
an indoor-side fan configured to generate a flow of air flowing from the filter toward the indoor-side heat exchanger;
a first sensor configured to detect an air temperature and humidity upstream of the indoor-side heat exchanger;
a second sensor configured to detect an air temperature upstream of the outdoor-side heat exchanger;
a third sensor configured to detect a temperature of a refrigerant flowing into the indoor-side heat exchanger;
a fourth sensor configured to detect a temperature of a refrigerant flowing out of the outdoor-side heat exchanger; and
an air-conditioning control device configured to receive, as input, signals from the first to fourth sensors,
in which the air-conditioning control device is configured to:
obtain an airflow rate feature (R) based on:

information (Teva) on the temperature of the refrigerant flowing into the indoor-side heat exchanger;
information (Ta-in) on the air temperature upstream of the indoor-side heat exchanger;
information (RHa-in) on the humidity upstream of the indoor-side heat exchanger;
information (To-in) on the air temperature upstream of the outdoor-side heat exchanger; and
information (Tsc) on the temperature of the refrigerant flowing out of the outdoor-side heat exchanger; and
determine that there is a possibility that dust adheres to at least one of the filter or the indoor-side heat exchanger in a case where the air-conditioning control device determines that the airflow rate feature (R) is smaller than a first threshold ($\alpha$1).

Advantageous Effects of Invention

According to the invention, it is possible to provide a railway vehicle air-conditioning apparatus capable of performing detection as to an increase in pressure loss caused due to dust clogging of a heat exchanger and dust clogging of a filter while distinguishing locations thereof when the heat exchanger and the filter are disposed on the same flow path.

Problems, configurations, and effects other than those described above will be made apparent by the following description of embodiments.

Brief Description of Drawings

[FIG. 1] FIG. 1 is a cross-sectional view illustrating arrangement of a railway vehicle air-conditioning apparatus.
[FIG. 2] FIG. 2 is a cross-sectional view illustrating arrangement of the railway vehicle air-conditioning apparatus.
[FIG. 3] FIG. 3 is a cycle system diagram of a cooling operation cycle according to a first embodiment of the invention.
[FIG. 4] FIG. 4 is a schematic diagram illustrating a case in which dust is deposited only on a filter according to the first embodiment of the invention.
[FIG. 5] FIG. 5 is a schematic diagram illustrating a case in which dust is deposited only on a heat exchanger according to the first embodiment of the invention.
[FIG. 6] FIG. 6 is a schematic diagram illustrating a case in which dust is deposited on both the filter and the heat exchanger according to the first embodiment of the invention.
[FIG. 7] FIG. 7 is a control flowchart according to the first embodiment of the invention.
[FIG. 8] FIG. 8 illustrates an example of a characteristic curve of a fan used in the first embodiment of the invention.
[FIG. 9] FIG. 9 is a cycle system diagram of a cooling operation cycle according to a second embodiment of the invention.
[FIG. 10] FIG. 10 is a cycle system diagram of a heating operation cycle according to the second embodiment of the invention.
[FIG. 11] FIG. 11 is a cross-sectional view illustrating arrangement of a railway vehicle air-conditioning apparatus according to a third embodiment of the invention.

Description of Embodiments

A structure that is a base for applying the invention will be described hereinafter with reference to the drawings. Note that a rail vehicle is a generic term for vehicles operated along a laid track, and means a railway vehicle, a streetcar, a new transportation system vehicle, a monorail vehicle, or the like. The embodiments of the invention will be described while a railway vehicle is taken as a typical example of the rail vehicle.

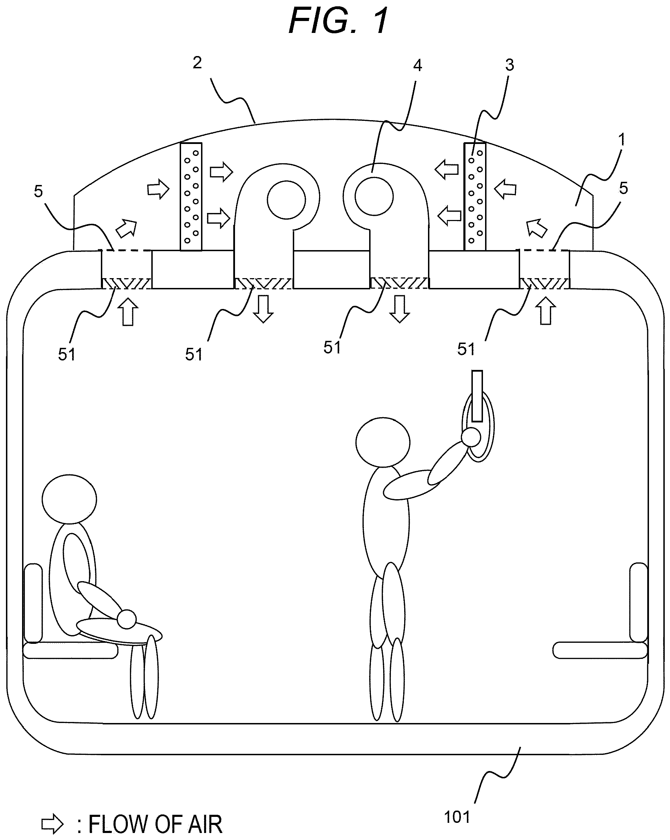

FIG. 1 is a cross-sectional view of a railway vehicle to which a railway vehicle air-conditioning apparatus can be mounted, and particularly illustrates arrangement of main components in an example in which a vehicle air-conditioning apparatus 1 is installed on the side of a ceiling of a vehicle body 101. In FIG. 1, air inside the vehicle flows into the vehicle air-conditioning apparatus 1 on the ceiling via grilles 51 as indicated by arrows in the drawing. This air further passes through respective filters 5, and passes through respective vehicle-indoor-side heat exchangers 3. Then, the air enters indoor-side fans 4, and by pressure increase at the indoor-side fans 4, the air is returned to the side of the vehicle interior via the grilles 51.

In a case where the vehicle air-conditioning apparatus 1 is used for cooling, a refrigerant having a temperature lower than an indoor air temperature is supplied to the heat exchanger 3, to decrease the temperature of the air passing through the heat exchanger 3. At this time, water vapor in the air may be subjected to dew condensation on the surface of the heat exchanger 3 to form liquid droplets or a liquid film. In a case where the vehicle air-conditioning apparatus 1 is used for heating, a refrigerant having a temperature higher than an indoor air temperature is supplied to the heat exchanger 3, to increase the temperature of the air passing through the heat exchanger 3.

The air blown out (generated) by the indoor-side fans 4 is distributed entirely into the vehicle body 101 via a duct, and thus a fan of a high static pressure type is often used, and for example, a centrifugal fan, a sirocco fan, or the like is suitably used.

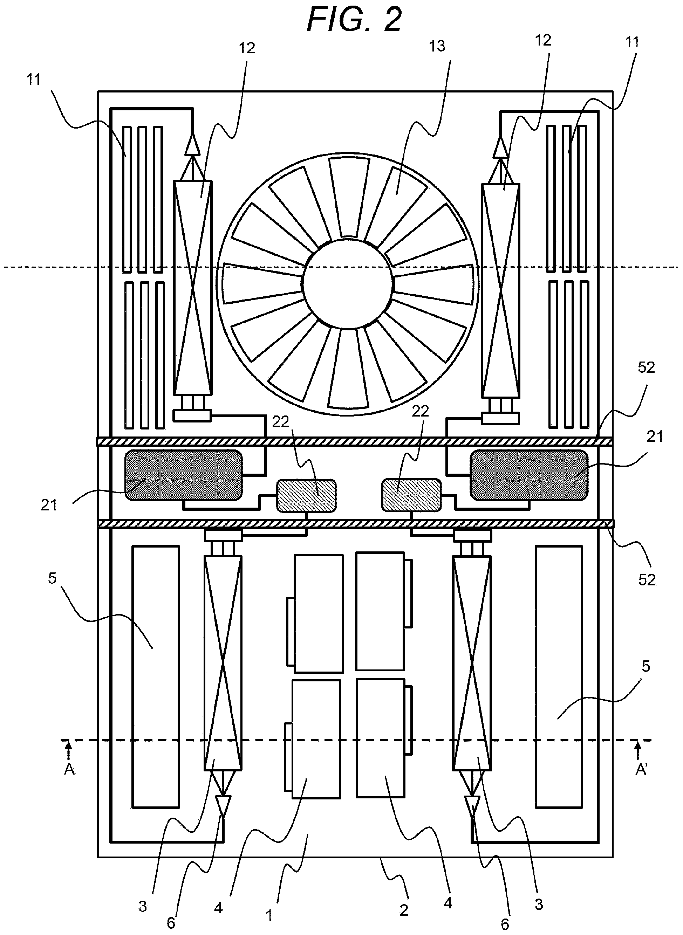

FIG. 2 is a cross-sectional arrangement view of the railway vehicle air-conditioning apparatus as viewed from above. The vehicle air-conditioning apparatus 1 is mainly divided into two blocks. Specifically, in FIG. 2, compressors 21 and accumulators 22 are placed between partition plates 52, and an upper side of FIG. 2 with respect to the partition plate 52 is a block of a duct in which outdoor air is handled, and a lower side of FIG. 2 with respect to the partition plate 52 is a block of a duct in which indoor air is handled as described in FIG. 1. The cross section taken along line A-A' in FIG. 2 corresponds to FIG. 1.

In the block on the lower side of FIG. 2, the filters 5, the vehicle-indoor-side heat exchangers 3, and the indoor-side fans 4 are disposed inside a casing. The air inside the vehicle flows from the far side to the near side of the plane of the paper of FIG. 2 via the filters 5. The air flowing from the left and right filters 5 passes through the indoor-side heat exchangers 3 on the central side, and is further returned to the inside of the vehicle by the indoor-side fans 4 disposed at the center.

The compressors 21 and the accumulators 22 are disposed at the center of FIG. 2. The compressor 21 compresses a refrigerant on the suction side to increase the pressure of the refrigerant, and delivers the refrigerant. The accumulator 22 prevents return of a large amount of liquid refrigerant to the compressor 21.

In the block on the upper side of FIG. 2, outdoor-side heat exchangers 12 and an outdoor-side fan 13 are disposed inside a casing. Air outside the vehicle is introduced from outdoor air intake ports 11 each of which is formed by a part of the casing being opened, and the air passes through the outdoor-side heat exchangers 12, and is blown out again to the outside of the vehicle through the outdoor-side fan 13.

Although not illustrated, wiring for supplying electric power to the indoor-side fans 4, the outdoor-side fan 13, and the compressor 21 is provided. As the refrigerant, a refrigerant gas whose pressure is increased by the compressor 21 flows to the outdoor-side heat exchanger 12, and the refrigerant condensed and liquefied here flows to a distributor 6 of the indoor-side heat exchanger 3, where the refrigerant flows through a plurality of paths branched therefrom to be decompressed and flows to the indoor-side heat exchanger 3. Then, the refrigerant evaporated in the indoor-side heat exchanger 3 returns to the compressor 21 via the accumulator 22. The refrigerant pipe is connected to realize this flow of the refrigerant.

[First Embodiment]

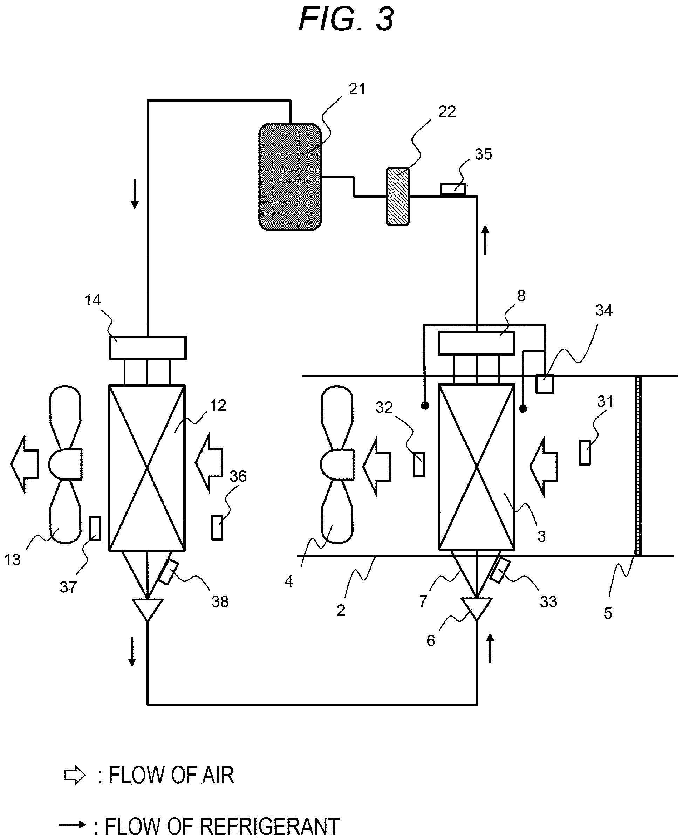

FIG. 3 is a cycle system diagram according to the railway vehicle air-conditioning apparatus of this first embodiment. Note that the invention is not limited by the following embodiments. In the cycle system diagram of FIG. 3, the flow of air and the flow of refrigerant are respectively similar to those in the vehicle air-conditioning apparatus illustrated in FIGS. 1 and 2. Regarding the flow of air, on the indoor side, air from the inside of the vehicle passes through the filter 5, passes through the vehicle-indoor-side heat exchanger 3, and returns to the inside of the vehicle again through the indoor-side fan 4. On the outdoor side, air outside the vehicle passes through the outdoor-side heat exchanger 12 and is released to the outside of the vehicle again through the outdoor-side fan 13. Here, a duct 2 is schematically illustrated to be seemingly present only on the indoor side, but actually the duct 2 is also present on the outdoor side. In addition, the indoor-side fan 4 is illustrated to be shaped like an axial fan, but a fan of a high static pressure type called a centrifugal fan or a sirocco fan is suitably used for the indoor-side fan 4.

In FIG. 3, the vehicle air-conditioning apparatus is dedicated to a cooling operation. The indoor-side heat exchanger 3 is always used as an evaporator, and the outdoor-side heat exchanger 12 is always used as a condenser. Regarding the flow of refrigerant, a high-temperature and high-pressure gas refrigerant discharged from the compressor 21 flows to the outdoor-side heat exchanger 12 via an outdoor-side heat exchanger gas header 14. A liquid refrigerant condensed here passes through the distributor 6 and further passes through capillary tubes 7 to be decompressed to become a low-temperature and low-pressure refrigerant and to be partially gasified, which then flows to the indoor-side heat exchanger 3. The refrigerant evaporated and substantially gasified here flows to the accumulator 22 via an indoor-side heat exchanger gas header 8, and is sucked again into the compressor 21.

In the present embodiment, a detection mode when dust is accumulated on the indoor-side heat exchanger 3 and the filter 5 will be described. Note that this is also applicable to the outdoor-side heat exchanger 12.

In the present embodiment, an indoor-side heat exchanger suction air sensor 31 is disposed upstream of the indoor-side heat exchanger 3 in the air flow direction in the duct 2, and an indoor-side heat exchanger discharge air sensor 32 is disposed downstream of the indoor-side heat exchanger 3. A temperature and humidity of air before being subjected to temperature adjustment through the indoor-side heat exchanger 3 can be measured by the indoor-side heat exchanger suction air sensor (first sensor) 31. In addition, a temperature and, in some cases, humidity of air after being subjected to temperature adjustment through the indoor-side heat exchanger 3 can be measured by the indoor-side heat exchanger discharge air sensor 32.

Further, a temperature on the refrigerant inflow side of the indoor-side heat exchanger 3 can be measured by an indoor-side heat exchanger refrigerant inlet sensor (third sensor) 33. The indoor-side heat exchanger refrigerant inlet sensor 33 may directly measure a refrigerant temperature. Alternatively, the indoor-side heat exchanger refrigerant inlet sensor 33 may measure a pipe surface temperature of the indoor-side heat exchanger 3, and may be, in some cases, attached to the surface of a distribution pipe such as the capillary tube 7 that guides the refrigerant to the pipe of the indoor-side heat exchanger 3.

In a duct (not illustrated) for air passing through the outdoor-side heat exchanger 12, an outdoor-side heat exchanger suction air sensor (second sensor) 36 is disposed upstream of the outdoor-side heat exchanger 12 in the flow direction, and an outdoor-side heat exchanger discharge air sensor 37 is disposed downstream of the outdoor-side heat exchanger 12. A temperature (corresponding to an outdoor temperature) and humidity of air before passing through the outdoor-side heat exchanger 12 can be measured by the outdoor-side heat exchanger suction air sensor 36, and a temperature and humidity of air after passing through the outdoor-side heat exchanger 12 can be measured by the outdoor-side heat exchanger discharge air sensor 37.

In addition, a temperature of a refrigerant on a side corresponding to an outlet side when the outdoor-side heat exchanger 12 is used for cooling can be measured by an outdoor-side heat exchanger refrigerant inlet sensor 38. The outdoor-side heat exchanger refrigerant inlet sensor 38 may measure a pipe surface temperature of the outdoor-side heat exchanger 12 instead of the refrigerant temperature, and may be, in some cases, attached to the surface of a distribution pipe of the outdoor-side heat exchanger 12. When the case is limited to an air-conditioning apparatus dedicated to a cooling operation, a temperature of a refrigerant to be measured by the outdoor-side heat exchanger refrigerant inlet sensor (fourth sensor) 38 is a temperature of a refrigerant cooled and liquefied in the outdoor-side heat exchanger 12, and thus a temperature of a pipe after the distribution pipes of the outdoor-side heat exchanger 12 are merged can be measured and used as a substitute. However, the pipe is limited to a pipe through which a refrigerant before passing through a large decompression element, such as an expansion valve or a capillary tube, passes.

In the present embodiment, from information provided from these temperature sensors, an air-conditioning control device obtains a decrease in an airflow rate. Specifically, for example, using temperature information Teva (°C) from the indoor-side heat exchanger refrigerant inlet sensor 33, temperature information Ta-in (°C) and humidity information RHa-in (%) from the indoor-side heat exchanger suction air sensor 31, temperature information To-in (°C) from the outdoor-side heat exchanger suction air sensor 36, and temperature information Tsc (°C) from the outdoor-side heat exchanger refrigerant inlet sensor 38, an airflow rate feature R can be obtained by Formula (1) described below using constants C1 to C4 obtained by learning from data of several days to several weeks immediately after cleaning during which there is determined to be no dust on the heat exchanger and the filter.

R = [Teva] + C1×[Ta-in] + C2×[RHa-in] + C3×[To-in] + C4x [Tsc] (1)  (1)

In addition to this, a threshold (first threshold) α1 at which the air-conditioning control device can determine, based on the long-term learning, that an airflow rate decreases is obtained in advance, and the decrease in the airflow rate is determined in a case where the airflow rate feature R decreases below the threshold α1.

The airflow rate feature R described here is an example, and it is possible to form the airflow rate feature R more resistant to disturbance by further using the sensors described above or by changing Formula (1), which is a feature calculation formula, and a coefficient learning method thereof. In addition, the learning of the constant and the threshold may be created through data obtained by a trial operation or simulation as well as an actual operation.

In the present embodiment, in addition to the above sensors, an indoor-side heat exchanger differential pressure sensor (fifth sensor) 34 that measures a pressure difference of air between an inlet and an outlet of the indoor-side heat exchanger 3 is added in the duct 2. With this configuration, pressure loss in the flow of air passing through the indoor-side heat exchanger 3 can be measured. This pressure loss increases as an airflow rate increases, and decreases as the airflow rate decreases, if the indoor-side heat exchanger 3 is free of contamination and the surface of the indoor-side heat exchanger 3 is not subjected to dew condensation.

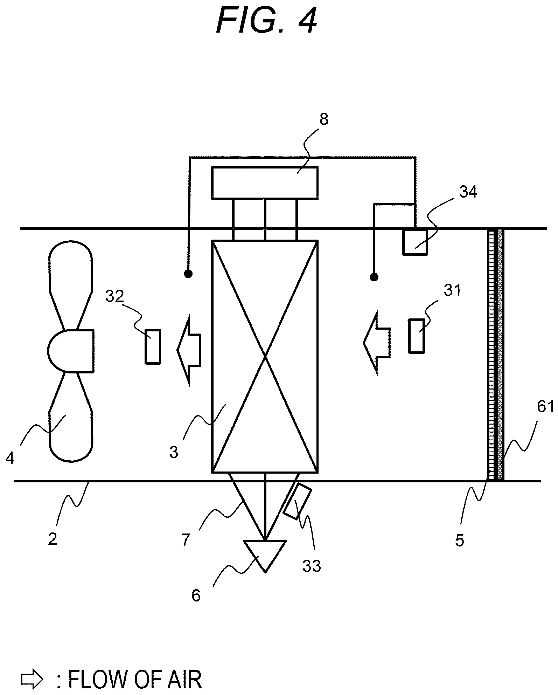

FIG. 4 is a schematic diagram illustrating an extracted configuration on the indoor side in the railway vehicle air-conditioning apparatus according to the present embodiment. FIG. 4 particularly illustrates a state in which dust 61 is deposited only on the filter 5. In such a case where it can be determined that no dust is accumulated on the heat exchanger, air is caused to flow in an air blowing mode in which no dew condensation occurs on the surface of the heat exchanger, and a change in the airflow rate can be grasped from a change in pressure loss across the indoor-side heat exchanger differential pressure sensor 34. In addition, since this decrease in the airflow rate is not caused due to the dust on the heat exchanger, the factor that causes the decrease in the airflow rate can be determined to be the dust 61 on the filter 5.

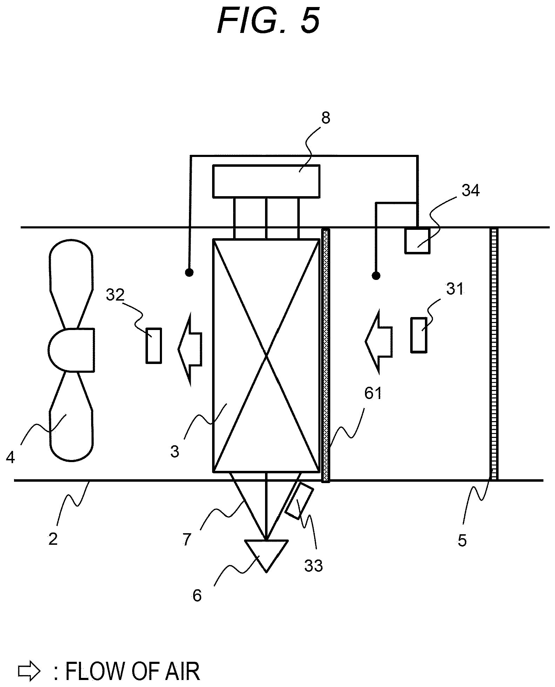

FIG. 5 is a schematic diagram illustrating an extracted configuration on the indoor side in the railway vehicle air-conditioning apparatus according to the present embodiment. FIG. 5 particularly illustrates a case in which the dust 61 is deposited only on the indoor-side heat exchanger 3. At this time, an airflow rate of air flowing on the indoor side is lower than the airflow rate in a case where there is no dust 61. However, the dust 61 is deposited on the windward side of the indoor-side heat exchanger 3 and this may lead to an increase in pressure loss, and thus it is conceivable that the pressure loss across the indoor-side heat exchanger differential pressure sensor 34 does not change. Although not illustrated here, if differential pressure sensors are provided in front of and behind the filter 5, a decrease in an airflow rate can be detected from a change in pressure loss in this side. However, the filter 5 is often designed to be replaceable from the vehicle interior side, separately from the air-conditioning apparatus. Thus, even if the differential pressure sensors are provided in front of and behind the filter 5, additional wiring is required to exchange information between the differently designed sensors and air-conditioning apparatus. In addition, the differential pressure sensor itself is not inexpensive, and thus it is desirable to reduce the number of sensors as much as possible.

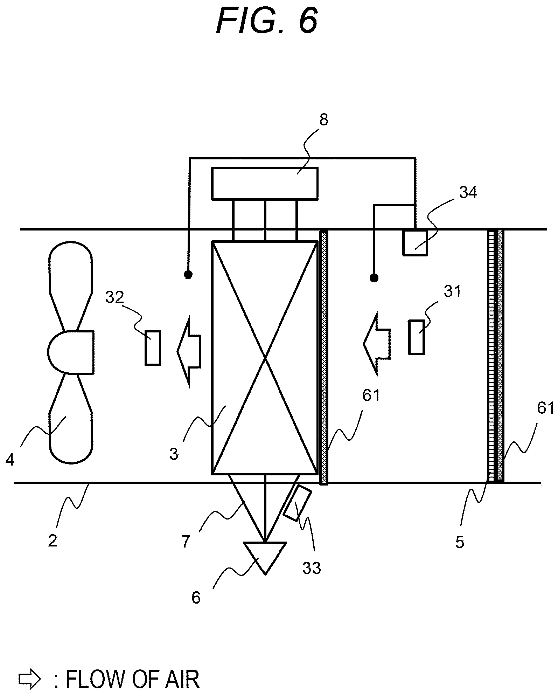

FIG. 6 is a schematic diagram illustrating an extracted configuration on the indoor side in the railway vehicle air-conditioning apparatus according to the present embodiment. FIG. 6 illustrates a case in which the dust 61 is deposited on both the indoor-side heat exchanger 3 and the filter 5. In actual operation, it is typically considered that dust is accumulated simultaneously on both the indoor-side heat exchanger 3 and the filter 5 like this case. If the differential pressure sensors are provided in front of and behind the filter 5 though not illustrated as described in the description of FIG. 5, it is possible to detect the decrease in the airflow rate by totaling with the pressure loss across the indoor-side heat exchanger differential pressure sensor 34 and from a pressure-airflow rate characteristic curve of the indoor-side fan 4. In addition, when air is caused to flow in the air blowing mode in which no dew condensation occurs on the surface of the heat exchanger and the decreased airflow rate can be identified, it is possible to detect respective dust deposition amounts as increases in airflow resistance, from the respective pressure losses at the differential pressure sensors in front of and behind the filter 5 and the indoor-side heat exchanger differential pressure sensor 34.

However, in the present embodiment, without providing the differential pressure sensors, as described above, in front of and behind the filter 5, it is possible to detect the deposition state of dust in each of the indoor-side heat exchanger 3 and the filter 5. As illustrated in FIG. 6, the filter 5 is disposed on the upstream side of the indoor-side heat exchanger 3, and fine dust that cannot be captured by the filter 5 flows to the indoor-side heat exchanger 3. For the indoor-side heat exchanger 3, typically, a fin-tube type heat exchanger is used in which a fin tube is formed of a metal pipe through which a refrigerant flows and metal fins having a plate shape attached to the surface of the metal pipe. Thus, the dust having passed through the filter 5 described above collides with and adheres to the upstream side of the fins. Further, the subsequent dust colliding with the adhering dust adheres, and the dust is deposited to cover the windward side of the heat exchanger.

In the present embodiment, the air-conditioning apparatus is particularly dedicated to the cooling operation, and the indoor-side heat exchanger 3 is used as an evaporator. Thus, moisture in the air is subjected to dew condensation on the surface of the indoor-side heat exchanger 3. As a result, even in a state where there is no dust, airflow resistance along with passage through the heat exchanger increases, and thus the flow rate of the passing air decreases.

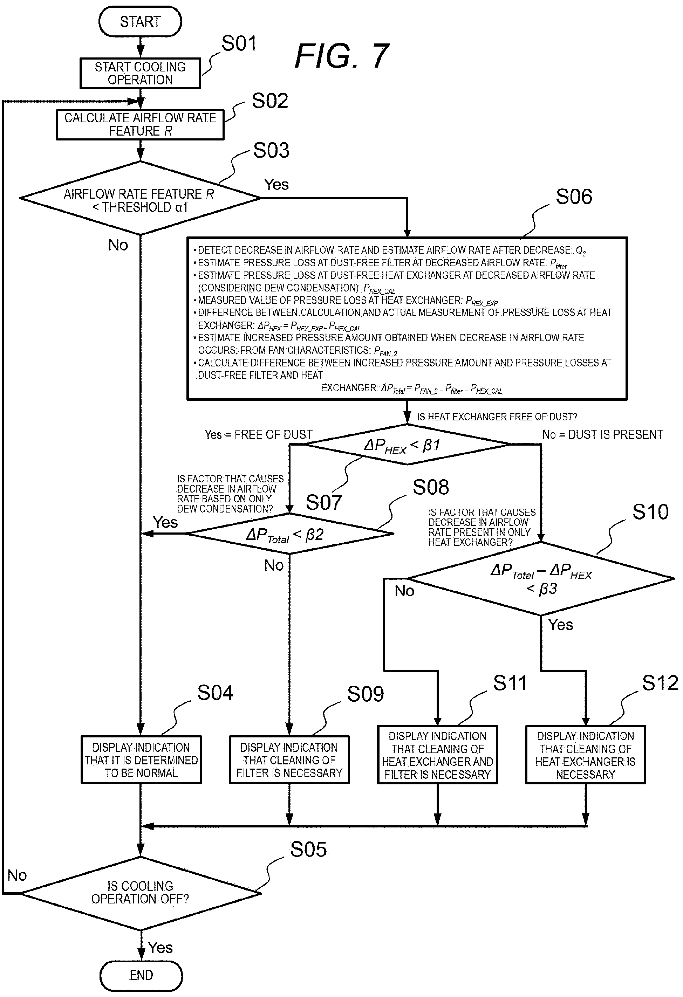

FIG. 7 illustrates flows of processing for identifying an amount of dust deposited in the air-conditioning apparatus, particularly respective amounts of dust deposited on the indoor-side heat exchanger 3 and the filter 5, under such conditions. Determination in the following flows is performed by an air-conditioning control device (cleaning time diagnosis device) (not illustrated) that receives output of each sensor and performs calculation, and that stores the threshold $\alpha 1$ and the like in a memory built therein.

First, in step S01 of FIG. 7, the cooling operation is started as the air-conditioning apparatus by turning on a switch (not illustrated). As a result, the fan and the compressor start operation. Although not illustrated, the air-conditioning control device preferably calculates the airflow rate feature R after a predetermined time has passed from the start-up and when the operation is stabilized to some extent. In the process of the calculation, in a case where there can be determined to be no dust on the indoor-side heat exchanger 3 and the filter 5, for example, if a period is within several days to several weeks immediately after cleaning, the coefficient of the airflow rate feature R can be learned accordingly. That is, in a short period immediately after cleaning, no comparison with the threshold $\alpha 1$ can be performed, and the cooling operation can be continued assuming that normality is maintained, that is, a decrease in an airflow rate does not occur.

Assuming that the coefficient and the threshold are learned (or known), the air-conditioning control device calculates the airflow rate feature R from Formula (1) in step S02, and then compares the airflow rate feature R with the threshold $\alpha 1$ in step S03. Here, the airflow rate feature R is used to determine whether the airflow rate feature R is smaller than the known threshold $\alpha 1$, on the premise that a smaller airflow rate feature R indicates a more decrease in the airflow rate. In a case where the airflow rate feature R is equal to or greater than the threshold $\alpha 1$, the air-conditioning control device determines that the decrease in the airflow rate does not occur, and recognizes this result as normal in which the operation can be continued, to proceed with the processing. Then, in step S04, for example, the air-conditioning control device causes a display (not illustrated) to display information indicating that the filter 5 and the indoor-side heat exchanger 3 are normal (there is no need of cleaning because dust does not adhere). In this case, unless there is instruction for stopping the cooling operation in step S05, the processing further returns to step S02 to continue the cooling operation.

On the other hand, in a case where the airflow rate feature R is smaller than the known threshold $\alpha 1$, the air-conditioning control device determines that there is a possibility that dust whose amount falls outside the acceptable range adheres to at least one of the filter 5 or the indoor-side heat exchanger 3 due to the decrease in the airflow rate, and causes the flow to proceed to step S06.

In step S06, the air-conditioning control device estimates a value Q2 of the decreased airflow rate from the airflow rate feature R, and obtains total reference pressure loss at the filter 5 and the indoor-side heat exchanger 3 caused along with passage of air through the filter 5 and the indoor-side heat exchanger 3 when a normal operation is performed in a state where there is no dust at the decreased airflow rate Q2. The total reference pressure loss may be obtained by calculating an air-blowing resistance coefficient from a design specification, or may be obtained by calculating a resistance coefficient at a normal airflow rate from data obtained during a period of time in which normality is maintained, that is, during a period in which there is no deposition of dust. In addition, a reference pressure loss at the indoor-side heat exchanger 3 needs to be calculated in consideration of dew condensation. For the consideration, an amount of condensed water is estimated by using the temperature and humidity of the air on the upstream side of the heat exchanger detected by the indoor-side heat exchanger suction air sensor 31 and the evaporation temperature of the refrigerant in the indoor-side heat exchanger 3 detected by the indoor-side heat exchanger refrigerant inlet sensor 33. Of course, the reference pressure loss at the indoor-side heat exchanger may be calculated by using an amount of dew condensation, which may be calculated from changes in temperature and humidity between the indoor-side heat exchanger suction air sensor 31 and the indoor-side heat exchanger discharge air sensor 32.

Further, the air-conditioning control device obtains a difference between this calculated reference pressure loss $P_{HEX\_CAL}$ at the indoor-side heat exchanger 3, which considers the influence of dew condensation, and a measured differential pressure $P_{HEX\_EXP}$ obtained by the indoor-side heat exchanger differential pressure sensor 34. Here, in a case where the reference pressure loss $P_{HEX\_CAL}$ and the measured differential pressure $P_{HEX\_EXP}$ are substantially the same, it indicates that the pressure loss caused due to the passage of air through the indoor-side heat exchanger 3 can be estimated while assuming a substantially dust-free state, and this indicates that no dust is present on the indoor-side heat exchanger 3 or dust whose amount is enough to be detected is not accumulated thereon. As a determination value for this, a heat exchanger differential pressure $\Delta P_{HEX}$ is calculated that is a difference between the calculation value (reference pressure loss $P_{HEX\_CAL}$) and the measured value (measured differential pressure $P_{HEX\_EXP}$) of the pressure loss at the indoor-side heat exchanger 3.

Further, the air-conditioning control device estimates a fan pressure $P_{FAN\_2}$ corresponding to the decreased airflow rate Q2 from the decreased airflow rate Q2 and a [pressure-airflow rate characteristic curve] of the indoor-side fan 4. If an airflow rate decreases, the pressure increases in most cases. A value obtained by subtracting the measured differential pressure $P_{HEX\_EXP}$ at the indoor-side heat exchanger 3 and the loss at the air blowing system other than the filter 5 from the fan pressure $P_{FAN\_2}$ is a differential pressure generated across the indoor-side fan 4. If this differential pressure is the same as the filter pressure loss $P_{filter}$ obtained when there is no dust, which has been calculated above, it can be determined that the filter 5 is free of dust or has only undetectable little dust. As a determination value for this, the air-conditioning control device calculates a total differential pressure $\Delta P_{Total}$ obtained by subtracting the pressure loss $P_{HEX\_CAL}$ at the indoor-side heat exchanger 3 and the filter pressure loss $P_{filter}$, which are obtained when there is no dust, from the fan pressure $P_{FAN\_2}$ corresponding to the increased pressure at the fan obtained when the decrease in the airflow rate to Q2 occurs.

After the respective values are calculated, the air-conditioning control device determines initially in step S07 whether there is dust on the indoor-side heat exchanger 3 by comparing the heat exchanger differential pressure $\Delta P_{HEX}$ with a threshold (second threshold) β1 as to whether the heat exchanger differential pressure $\Delta P_{HEX}$ is smaller than the threshold β1. As described above, the heat exchanger differential pressure $\Delta P_{HEX}$ is the difference between the pressure loss obtained when there is no dust and the measured value. Thus, in a case where the heat exchanger differential pressure $\Delta P_{HEX}$ is smaller than the threshold β1, the calculation value (reference pressure loss) obtained when there is no dust corresponds to the measured pressure loss at the indoor-side heat exchanger 3, that is, this case indicates that the indoor-side heat exchanger 3 has almost no dust (the amount of adhering dust falls within the acceptable range). On the other hand, in a case where the heat exchanger differential pressure $\Delta P_{HEX}$ is equal to or greater than the threshold β1, it indicates that dew condensation alone cannot account for an increase in pressure loss at the indoor-side heat exchanger 3, that is, dust is deposited on the indoor-side heat exchanger 3.

Here, in a case where there is no dust, that is, in a case where the heat exchanger differential pressure $\Delta P_{HEX}$ is smaller than the threshold β1, the air-conditioning control device determines in step S08 whether the factor that causes the decrease in the airflow rate is based on only dew condensation. The total differential pressure $\Delta P_{Total}$ described above is obtained by subtracting the total reference pressure loss at the indoor-side heat exchanger 3 and the filter 5, which is the pressure loss in the case where there is no dust, from the static pressure at the indoor-side fan 4 corresponding to the decreased airflow rate Q2.

In a case where the value of the total differential pressure $\Delta P_{Total}$ is smaller than a threshold (third threshold) β2, it indicates that the decrease in the airflow rate can be estimated to be caused by the total reference pressure loss at the indoor-side heat exchanger 3 and the filter 5 in a state where there is no dust, and it indicates that the factor that causes the decrease in the airflow rate can be estimated to be based on an increase in pressure loss caused due to dew condensation on the indoor-side heat exchanger 3. Thus, in this case, the air-conditioning control device determines that neither the indoor-side heat exchanger 3 nor the filter 5 is subjected to accumulation of dust, and that the indoor-side heat exchanger 3 and the filter 5 are normal, and causes the flow to proceed to step S04.

On the other hand, in a case where the value of the total differential pressure $\Delta P_{Total}$ is equal to or greater than the threshold β2, this indicates that an increase in pressure loss can be estimated not to occur only by dew condensation. Thus, the air-conditioning control device determines that a factor that causes the increase in pressure loss, that is, accumulation of dust, is present in the filter 5, which is the remaining location for the factor. Then, in step S09, the air-conditioning control device causes the display (not illustrated) to display information indicating that cleaning of the filter 5 is necessary because dust adheres to the filter 5, and subsequently causes the flow to proceed to step S05.

Next, in a case where the heat exchanger differential pressure $\Delta P_{HEX}$ is equal to or greater than the threshold β1, this indicates that dust is deposited on the indoor-side heat exchanger 3. In this case, in step S10, the air-conditioning control device checks whether a value (filter differential pressure) obtained by subtracting the value of the heat exchanger differential pressure $\Delta P_{HEX}$ from the value of the total differential pressure $\Delta P_{Total}$, described above, is smaller than a threshold (fourth threshold) β3.

In a case where the difference between the increase in static pressure (total differential pressure $\Delta P_{Total}$) caused along with the decrease in the fan airflow rate and the difference (heat exchanger differential pressure $\Delta P_{HEX}$) between the pressure loss obtained when there is no dust and the measured value of the heat exchanger is smaller than the threshold β3, it can be substantially estimated that the factor that causes the decrease in the airflow rate is the pressure loss at the indoor-side heat exchanger. Then, in step S12, the air-conditioning control device causes the display (not illustrated) to display information indicating that cleaning of the indoor-side heat exchanger 3 is necessary because dust adheres to the indoor-side heat exchanger 3, and subsequently causes the flow to proceed to step S05.

On the other hand, in a case where the difference is equal to or greater than the threshold β3, it indicates that the factor that causes the decrease in the airflow rate is present in a location other than the indoor-side heat exchanger 3, too, and it can be estimated that dust is also deposited on the filter 5, which is the remaining location for the factor. Thus, in step S11, the air-conditioning control device causes the display (not illustrated) to display information indicating that cleaning of the indoor-side heat exchanger 3 and the filter 5 is necessary because dust adheres to the indoor-side heat exchanger 3 and the filter 5, and then causes the flow to proceed to step S05.

According to the above determinations, it is possible to display four types of information of "normal", "cleaning of only the filter is necessary", "cleaning of the indoor-side heat exchanger is necessary", and "cleaning of both the filter and the indoor-side heat exchanger is necessary", and a worker can perform cleaning of the air-conditioning apparatus in accordance with the information. In addition, the thresholds β1 to β3 are values in consideration of a pressure loss other than those at the filter 5 and the indoor-side heat exchanger 3, and these values are also determined from data when the filter 5 and the indoor-side heat exchanger 3 are not contaminated. This data may be data during business operation or other data.

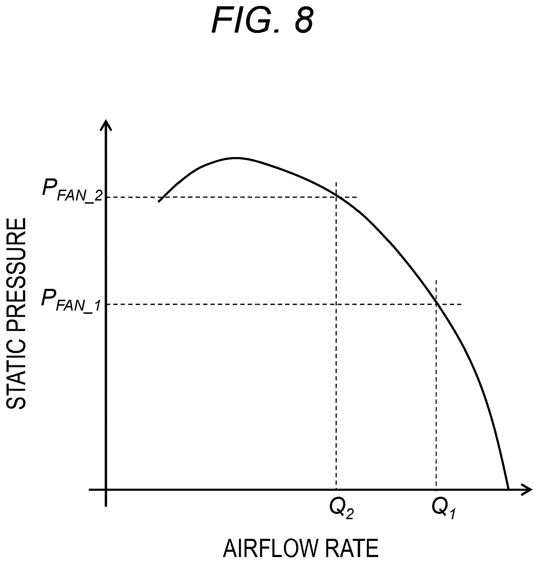

FIG. 8 is a graph illustrating an example of a characteristic curve of the indoor-side fan 4 used in the first embodiment of the invention, where the vertical axis represents static pressure and the horizontal axis represents airflow rate. In a case where the airflow rate of the indoor-side fan 4 at the time when there is no dust on the filter 5 and the indoor-side heat exchanger 3 is Q1, it means that the fan exhibits a static pressure $P_{FAN\_1}$, and this static pressure and air sucked in from the inside of the vehicle are equal to air-blowing resistance of the entire air-conditioning apparatus obtained by being totaled until this static pressure and the air sucked in from the inside of the vehicle return to the inside of the vehicle again via the filter 5, the indoor-side heat exchanger 3, and the indoor-side fan 4. Here, assuming the fan characteristics as illustrated in FIG. 8, when the airflow rate decreases to Q2, the output static pressure of the fan becomes $P_{FAN\_2}$, and this static pressure is higher than $P_{FAN\_1}$ in FIG. 8. This static pressure is the same as the air-blowing resistance of the entire air-conditioning apparatus, and thus this means that the air-blowing resistance increases. In this manner, when the fan characteristics are obtained in advance as illustrated in FIG. 8, an amount of increase in the air-blowing resistance of the entire air-conditioning apparatus can be known by obtaining an amount of decrease in the airflow rate.

[Second Embodiment]

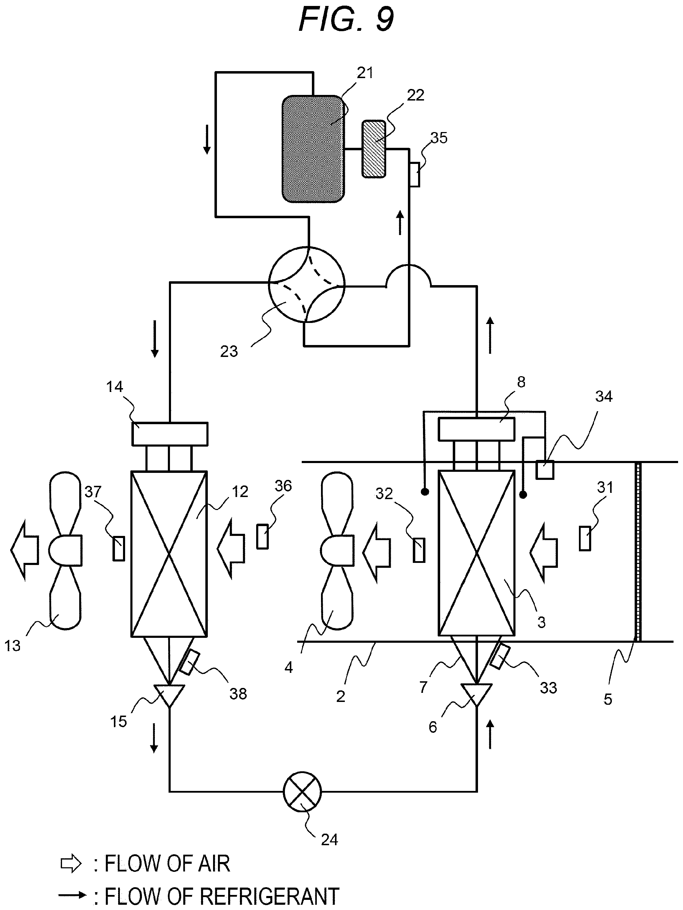

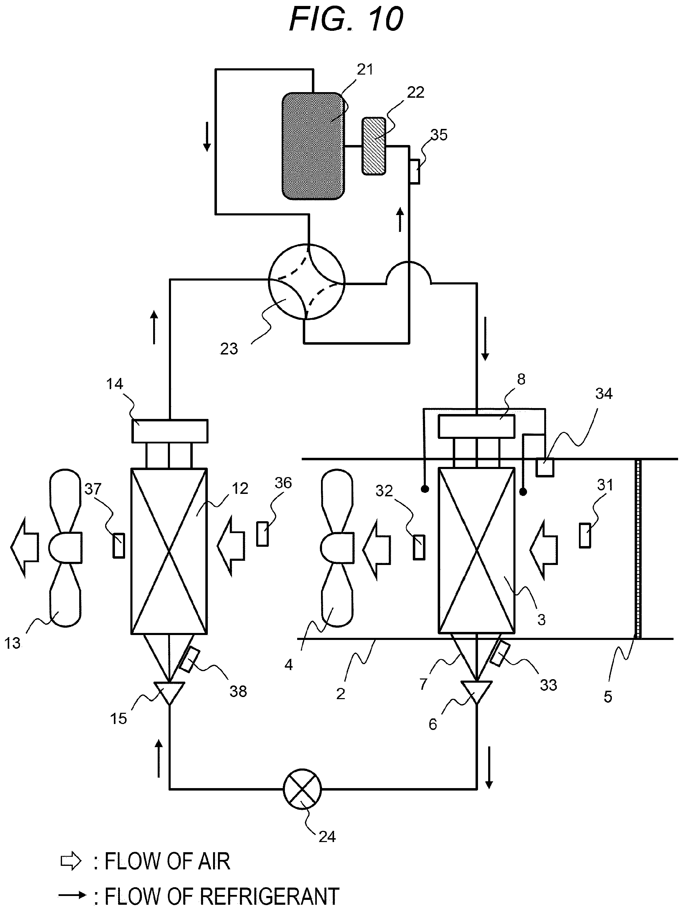

FIGS. 9 and 10 are cycle system diagrams according to a railway vehicle air-conditioning apparatus of this second embodiment.

In each of the cycle system diagrams of FIGS. 9 and 10, the flow of air is similar to that in the vehicle air-conditioning apparatus illustrated in FIGS. 1 and 2. Regarding the flow of air, on the indoor side, air from the inside of the vehicle passes through the filter 5, passes through the indoor-side heat exchanger 3, and returns to the inside of the vehicle again through the indoor-side fan 4. On the outdoor side, air outside the vehicle passes through the outdoor-side heat exchanger 12 via an outdoor filter (not illustrated), and is released to the outside of the vehicle again through the outdoor-side fan 13. Here, the duct 2 is schematically illustrated to be seemingly present only on the indoor side, but actually the duct 2 is also present on the outdoor side. In addition, the indoor-side fan 4 is illustrated to be shaped like an axial fan, but a fan of a high static pressure type called a centrifugal fan or a sirocco fan is suitably used for the indoor-side fan 4.

This second embodiment is different from the first embodiment in that in the second embodiment, the refrigeration cycle illustrated in the drawings includes a four-way valve 23 to enable cooling operation and heating operation to be used by switching. FIG. 9 illustrates the flow of the refrigerant during the cooling in which the indoor-side heat exchanger 3 is used as an evaporator, and FIG. 10 illustrates the flow of the refrigerant during the heating in which the indoor-side heat exchanger 3 is used as a condenser.

During the cooling illustrated in FIG. 9, a high-temperature gas refrigerant discharged from the compressor 21 passes through the four-way valve 23 and flows through the outdoor-side heat exchanger gas header 14 to the outdoor-side heat exchanger 12, where the refrigerant is cooled and liquefied by the outside air. The liquefied refrigerant flows through an outdoor-side distributor 15 to an expansion valve 24, and is decompressed in the expansion valve 24, whereby part of the liquid refrigerant is gasified and the temperature of the refrigerant decreases. The refrigerant that has been decompressed and whose temperature has decreased in the expansion valve 24 reaches the indoor-side heat exchanger 3 from the distributor 6 via the capillary tubes 7. Since the refrigerant has been already decompressed in the expansion valve 24, the capillary tube 7 is used here to cause the refrigerant distributed by the distributor 6 to flow into the refrigerant path in the indoor-side heat exchanger 3. Thus, in the capillary tube 7, it is not necessary to decrease the refrigerant pressure, that is, it is not necessary to decompress the refrigerant. The refrigerant evaporated and gasified by cooling vehicle interior air in the indoor-side heat exchanger 3 reaches the four-way valve 23 via the indoor-side heat exchanger gas header 8, and then returns to the compressor 21 via the accumulator 22. Here, the low-temperature and low-pressure gas refrigerant is sucked into the compressor 21, is compressed and increased in pressure to become a high-temperature and high-pressure gas refrigerant, and is discharged. Then, the refrigerant flows again to the four-way valve 23.

On the other hand, during the heating illustrated in FIG. 10, a high-temperature gas refrigerant discharged from the compressor 21 passes through the four-way valve 23, flows toward the indoor-side heat exchanger gas header 8, and flows to the indoor-side heat exchanger 3, where the refrigerant itself is cooled and liquefied by heating vehicle interior air. The liquefied refrigerant flows through the capillary tubes 7 and further flows from the distributor 6 to the expansion valve 24, and is decompressed in the expansion valve 24, whereby part of the liquid refrigerant is gasified and the temperature of the refrigerant further decreases. The refrigerant that has been decompressed and whose temperature has decreased in the expansion valve 24 reaches the outdoor-side heat exchanger 12 via the outdoor-side distributor 15. The refrigerant evaporated and gasified by absorbing heat from the outside air in the outdoor-side heat exchanger 12 reaches the four-way valve 23 via the outdoor-side heat exchanger gas header 14, and then returns to the compressor 21 via the accumulator 22. Here, the low-temperature and low-pressure gas refrigerant is sucked into the compressor 21, is compressed and increased in pressure to become a high-temperature and high-pressure gas refrigerant, and is discharged. Then, the refrigerant flows again to the four-way valve 23.

By switching the piping of the four-way valve 23 in this manner, it is possible to switch between the cooling and the heating while the same piping is maintained. In the refrigeration cycle having such configurations, in the present embodiment, an indoor-side heat exchanger suction air sensor (seventh sensor) 31 is provided on the suction side, where air from the inside of the vehicle is sucked in, in the indoor-side casing to measure an air temperature and humidity of air before being subjected to temperature adjustment through the indoor-side heat exchanger 3. In addition, an air temperature after being subjected to temperature adjustment through the indoor-side heat exchanger 3 is measured by the indoor-side heat exchanger discharge air sensor 32. The humidity may also be measured by the indoor-side heat exchanger discharge air sensor 32.

In addition, in order to measure an evaporation temperature of the refrigerant in the indoor-side heat exchanger 3, an indoor-side heat exchanger refrigerant inlet sensor (ninth sensor) 33 is provided at the capillary tube 7 to measure a refrigerant temperature after the refrigerant has passed through the distributor 6 during the cooling. The evaporation temperature is basically a temperature obtained by measuring the saturation temperature of the refrigerant inside the indoor-side heat exchanger 3. However, depending on locations in the indoor-side heat exchanger 3, the refrigerant may become a superheated gas refrigerant to have a temperature higher than the saturation temperature. Thus, the temperature sensor is attached to the capillary tube 7 corresponding to the inlet of the heat exchanger. For the measurement of the evaporation temperature, a sensor for measuring a pressure of the refrigerant may be provided in the vicinity of the indoor-side heat exchanger 3, but there is a problem that the cost increases.

Similarly, for the outdoor side, an outdoor-side heat exchanger suction air sensor (sixth sensor) 36 is provided on the suction side where air outside the vehicle is sucked in to measure an air temperature and humidity of air before being subjected to temperature adjustment through the outdoor-side heat exchanger 12. In addition, an air temperature of air after being subjected to temperature adjustment through the outdoor-side heat exchanger 12 is measured by the outdoor-side heat exchanger discharge air sensor 37. The humidity may also be measured by the outdoor-side heat exchanger discharge air sensor 37.

In addition, in order to measure an evaporation temperature of the refrigerant in the outdoor-side heat exchanger 12, an outdoor-side heat exchanger refrigerant inlet sensor (eighth sensor) 38 is provided to measure a refrigerant temperature after the refrigerant has passed through the outdoor-side distributor 15 during the heating. The evaporation temperature is basically a temperature obtained by measuring the saturation temperature of the refrigerant inside the outdoor-side heat exchanger 12. However, depending on locations in the outdoor-side heat exchanger 12, the refrigerant may become a superheated gas refrigerant to have a temperature higher than the saturation temperature. Thus, the temperature sensor is attached at a location corresponding to the inlet of the heat exchanger. For the measurement of the evaporation temperature, a sensor for measuring a pressure of the refrigerant may be provided in the vicinity of the outdoor-side heat exchanger 12.

Further, in order to grasp the circulation amount of the refrigerant in the refrigeration cycle, it is desirable to measure a refrigerant pressure on the suction side of the compressor to grasp the density of the refrigerant. For this purpose, a compressor suction-side refrigerant sensor 35 is provided to measure the refrigerant pressure and a temperature on the suction side of the compressor.

Further, as described in the embodiment other than the present embodiment, the change in air pressure caused along with the air blowing across the indoor-side heat exchanger 3 is measured by the indoor-side heat exchanger differential pressure sensor 34. With these configurations, the air-conditioning control device can similarly detect accumulation of dust deposited on the indoor-side heat exchanger 3 and the filter 5 during the cooling, with the processing in the flows illustrated in FIG. 7.

More specifically, when the heating operation is performed in the refrigeration cycle, referring to step S03 in FIG. 7, the air-conditioning control device receives, as input, signals from the sixth to ninth sensors, obtains an airflow rate feature (R) based on information (Teva) on a temperature of a refrigerant flowing into the outdoor-side heat exchanger 12, information (Ta-in) on an air temperature upstream of the outdoor-side heat exchanger 12, information (RHa-in) on humidity upstream of the outdoor-side heat exchanger 12, information (To-in) on an air temperature upstream of the indoor-side heat exchanger 3, and information (Tsc) on a temperature of a refrigerant flowing out of the indoor-side heat exchanger 3, and determines that there is a possibility that dust adheres to at least one of the outdoor filter or the outdoor-side heat exchanger 12 in a case where the air-conditioning control device determines that the airflow rate feature (R) is smaller than a fifth threshold (α2). The fifth threshold (α2) can be obtained in a manner similar to the manner for obtaining the first threshold (α1). Regarding the subsequent flows, the air-conditioning control device can similarly determine whether dust is deposited on the outdoor filter or the outdoor-side heat exchanger 12 in accordance with the flows of FIG. 7. In addition, the air-conditioning control device can also cause the display to display information on whether dust is deposited on the outdoor filter or the outdoor-side heat exchanger 12.

In addition, the outdoor-side heat exchanger 12 during the cooling is used as a condenser, and thus dew condensation does not occur on the surface of the outdoor-side heat exchanger 12. Further, since it is often the case that a type of filter on which dust can be deposited is not provided, it is not necessary to distinguish dust depositions between the filter and the heat exchanger, and therefore, when a decrease in an airflow rate at the outdoor-side heat exchanger 12 can be detected from the measured temperature, humidity, and pressure data, an increase in pressure loss caused due to the deposition of dust or powder dust such as dirt, which may be present due to the fact of being on the outdoor side, on the outdoor-side heat exchanger 12 can be easily estimated as a factor that causes the decrease in the airflow rate.

As a method of detecting the decrease in the airflow rate, the decrease in the airflow rate may be detected by using the compressor suction-side refrigerant sensor 35, the outdoor-side heat exchanger refrigerant inlet sensor 38, the outdoor-side heat exchanger suction air sensor 36, and the outdoor-side heat exchanger discharge air sensor 37 to perform learning based on data during a normal operation such as an operation after cleaning. To determine how many days to weeks immediately after cleaning is a period during which it can be determined that there is no deposition of dust on the heat exchanger, it is necessary to perform learning including learning about the operation state of the train.

Although not illustrated, when a refrigerant pressure on the discharge side of the compressor 21 can be measured, it is possible to know refrigerant enthalpies on the suction side and discharge side of the compressor based on the compressor suction-side refrigerant sensor 35, and also know a refrigerant enthalpy on the outlet side of the outdoor-side heat exchanger 12 from the outdoor-side heat exchanger refrigerant inlet sensor 38 and the refrigerant pressure on the discharge side. Thus, from these, and volumetric efficiency of the compressor 21 estimated as refrigerant density on the suction side of the compressor 21 and the like, it is possible to estimate an amount of heat dissipated to the air side in the outdoor-side heat exchanger 12. It is possible to estimate an airflow rate by allowing this amount of heat dissipated and a product of an amount of change in enthalpy on the air side obtained from the outdoor-side heat exchanger suction air sensor 36 and the outdoor-side heat exchanger discharge air sensor 37 and an airflow rate to use enthalpy.

The detection of the decrease in the airflow rate is not limited to the above means because various means for obtaining the enthalpy illustrated in the embodiment can be considered.

During the heating, the indoor-side heat exchanger 3 is used as a condenser, and thus dew condensation does not occur on the indoor-side heat exchanger 3. Thus, by eliminating the need for considering the influence of dew condensation in the flows of FIG. 7, it is possible to more easily detect dust depositions on the heat exchanger and the filter distinctively.

On the other hand, the outdoor-side heat exchanger 12 may be subjected to dew condensation or frost formation during the heating. Regarding the influence of the dew condensation, the humidity of air sucked into the outdoor-side heat exchanger 12 is grasped by the outdoor-side heat exchanger suction air sensor 36, and the evaporation temperature is grasped by the outdoor-side heat exchanger refrigerant inlet sensor 38, whereby an amount of the dew condensation is estimated, to enable estimating an increase in pressure loss. However, in a case where frost has been formed, it is difficult to estimate the pressure loss. Thus, in a case where the evaporation temperature obtained by the outdoor-side heat exchanger refrigerant inlet sensor 38 is, for example, 0°C or lower, it is conceivable to add processing of skipping the determination. The evaporation temperature for determining the frost formation needs to be adjusted depending on vehicles, operation conditions, and the like.

[Third Embodiment]

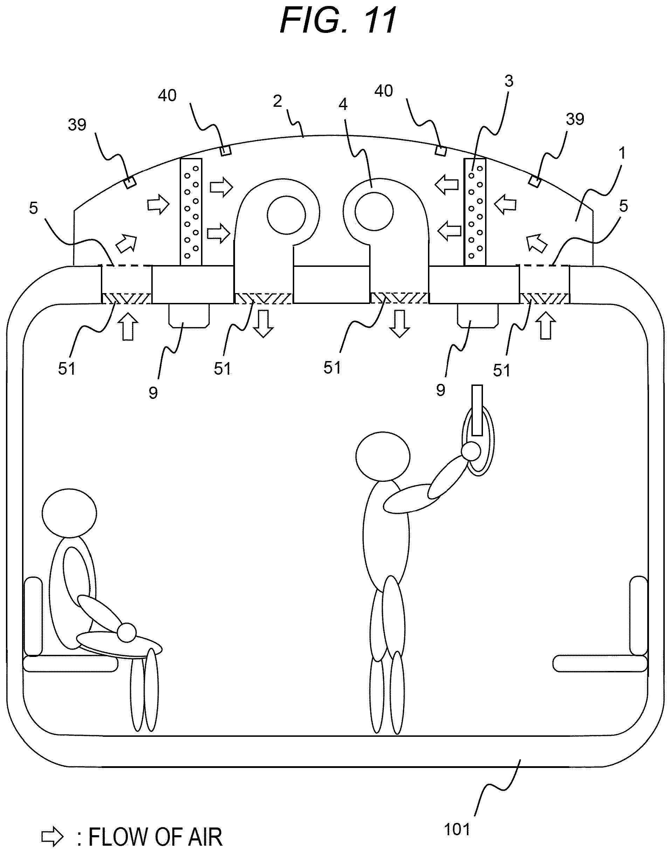

FIG. 11 is a cross-sectional view illustrating arrangement of a railway vehicle air-conditioning apparatus according to this third embodiment. In the present embodiment, in the vehicle air-conditioning apparatus 1, each heat exchanger suction-side illuminance sensor (first light sensor) 39 is provided between the filter 5 and the indoor-side heat exchanger 3, and each heat exchanger blowing-out-side illuminance sensor (second light sensor) 40 is provided between the indoor-side heat exchanger 3 and the indoor-side fan 4. Each illuminance sensor is a sensor that measures illuminance, brightness, and the like of light reaching the sensor after having been emitted from a corresponding one of vehicle interior lighting devices 9, installed inside the vehicle body 101, that is, in the inside of the vehicle, and having passed through or being transmitted through the grille 51, the filter 5, and/or the indoor-side heat exchanger 3.

Regarding the amounts of light detected by these sensors, the amount of light detected by the heat exchanger suction-side illuminance sensor 39 is presumed to decrease, when dust is deposited on the filter 5, in accordance with the amount of the dust. In addition, the amount of light detected by the heat exchanger blowing-out-side illuminance sensor 40 is presumed to further decrease because the amount of the light having reached the heat exchanger suction-side illuminance sensor 39 is further decreased by dust deposited on the indoor-side heat exchanger 3.

Thus, it is possible to estimate the amount of the dust deposited on the filter 5 by causing the air-conditioning control device to monitor a value at the heat exchanger suction-side illuminance sensor 39 over time. In addition, it is possible to estimate the amount of the dust deposited on the indoor-side heat exchanger 3 by causing the air-conditioning control device to monitor an amount of change between the heat exchanger suction-side illuminance sensor 39 and the heat exchanger blowing-out-side illuminance sensor 40 over time.

These detection values of the sensors are subjected to influences of brightness outside the vehicle, sensor positions, and states of the vehicle interior lighting devices 9. Thus, the influence of brightness outside the vehicle is decreased by limiting a timing of measurement to, for example, a night time after business operation. In addition, the influence of variation or the like, for each vehicle body, in the sensor position or the state of the vehicle interior lighting device 9 can be decreased by learning data particularly at a time when there is no dust such as a time after cleaning and by calibrating it. In recent years, light-emitting diodes (LEDs) are often used for the vehicle interior lighting device 9, and thus the influence of aging is small. If there is a thing that can be additionally mentioned, an effect of decreasing the influence may be further obtained by measuring a temperature of air inside the vehicle and adding this value to the element of the learning.

By using the means of this embodiment, it is possible to detect the fact that an amount of adhering dust falls outside an acceptable range while distinguishing between the deposition of dust on the filter 5 and the deposition of dust on the indoor-side heat exchanger 3, without arrangement of the sensors in the refrigeration cycle described in the first embodiment or the second embodiment or in addition to the arrangement of the sensors therein.

Reference Signs List

| | |
|---|---|
| 1 | vehicle air-conditioning apparatus |
| 2 | duct |
| 3 | indoor-side heat exchanger |
| 4 | indoor-side fan |
| 5 | filter |
| 6 | distributor |
| 7 | capillary tube |
| 8 | indoor-side heat exchanger gas header |
| 9 | vehicle interior lighting device |
| 11 | outdoor air intake port |
| 12 | outdoor-side heat exchanger |
| 13 | outdoor-side fan |
| 14 | outdoor-side heat exchanger gas header |
| 15 | outdoor-side distributor |
| 21 | compressor |
| 22 | accumulator |
| 23 | four-way valve |
| 24 | expansion valve |
| 31 | indoor-side heat exchanger suction air sensor |
| 32 | indoor-side heat exchanger discharge air sensor |

33    indoor-side heat exchanger refrigerant inlet sensor
34    indoor-side heat exchanger differential pressure sensor
35    compressor suction-side refrigerant sensor
36    outdoor-side heat exchanger suction air sensor
37    outdoor-side heat exchanger discharge air sensor
38    outdoor-side heat exchanger refrigerant inlet sensor
39    heat exchanger suction-side illuminance sensor
40    heat exchanger blowing-out-side illuminance sensor
51    grille
52    partition plate
61    dust
101    vehicle body

**Claims**

1. A rail vehicle air-conditioning apparatus (1), comprising:

   a refrigeration cycle in which an outdoor-side heat exchanger (12), a compressor (21), and an indoor-side heat exchanger (3) are connected by a pipe, and in which a refrigerant is adapted to pass through the pipe;
   a filter (5) installed on an upstream side of the indoor-side heat exchanger (3) in an air flow direction; and
   an indoor-side fan (4) configured to generate a flow of air flowing from the filter (5) toward the indoor-side heat exchanger (3);
   **characterized by** further comprising:

       a first sensor (31) configured to detect an air temperature and humidity upstream of the indoor-side heat exchanger (3);
       a second sensor (36) configured to detect an air temperature upstream of the outdoor-side heat exchanger (12);
       a third sensor (33) configured to detect a temperature of a refrigerant flowing into the indoor-side heat exchanger (3);
       a fourth sensor (38) configured to detect a temperature of a refrigerant flowing out of the outdoor-side heat exchanger (12); and
       an air-conditioning control device configured to receive, as input, signals from the first to fourth sensors (38), wherein the air-conditioning control device is configured to:
       obtain an airflow rate feature (R) based on:

           information (Teva) on the temperature of the refrigerant flowing into the indoor-side heat exchanger (3);
           information (Ta-in) on the air temperature upstream of the indoor-side heat exchanger (3);
           information (RHa-in) on the humidity upstream of the indoor-side heat exchanger (3);
           information (To-in) on the air temperature upstream of the outdoor-side heat exchanger (12); and
           information (Tsc) on the temperature of the refrigerant flowing out of the outdoor-side heat exchanger (12); and
           determine that there is a possibility that dust (61) adheres to at least one of the filter (5) or the indoor-side heat exchanger (3) in a case where the air-conditioning control device determines that the airflow rate feature (R) is smaller than a first threshold ($\alpha$1).

2. The rail vehicle air-conditioning apparatus (1) according to claim 1, further comprising:

   a fifth sensor (34) configured to detect a pressure difference of air between an inlet and an outlet of the indoor-side heat exchanger (3),
   wherein the air-conditioning control device having received, as input, a signal from the fifth sensor (34) is configured to:

       estimate, from the airflow rate feature (R), an airflow rate (Q2) decreased due to passage through the filter (5) and the indoor-side heat exchanger (3); and
       compare a heat exchanger differential pressure ($\Delta P_{HEX}$) with a second threshold ($\beta$1), the heat exchanger differential pressure ($\Delta P_{HEX}$) being a differential pressure between a reference pressure loss ($P_{HEX\_CAL}$) and a measured differential pressure ($P_{HEX\_EXP}$) that is obtained by the fifth sensor (34), the reference pressure loss ($P_{HEX\_CAL}$) corresponding to a pressure loss at the indoor-side heat exchanger (3) caused along with passage of air through the indoor-side heat exchanger (3) when there is no dust (61) at the decreased airflow rate (Q2), and determine that an amount of dust (61) adhering to the indoor-side heat exchanger (3) falls within an acceptable range in a case where the air-conditioning control device determines that the heat exchanger differential pressure ($\Delta P_{HEX}$) is smaller than the second threshold ($\beta 1$).

3. The rail vehicle air-conditioning apparatus (1) according to claim 2, wherein the air-conditioning control device is configured to:

estimate a fan pressure ($P_{FAN\_2}$) corresponding to the decreased airflow rate (Q2) based on the decreased airflow rate (Q2) and a characteristic of the indoor-side fan (4), and further obtain a fan differential pressure generated across the indoor-side fan (4) based on the fan pressure ($P_{FAN\_2}$);
calculate a total differential pressure ($\Delta P_{Total}$) obtained by subtracting the reference pressure loss ($P_{HEX\_CAL}$) at the indoor-side heat exchanger (3) and a filter pressure loss ($P_{filter}$) from the fan differential pressure ($P_{FAN\_2}$);
determine that an amount of dust 61 adhering to the indoor-side heat exchanger (3) and the filter (5) falls within an acceptable range in a case where the total differential pressure ($\Delta P_{Total}$) is smaller than a third threshold ($\beta 2$); and
determine that an amount of dust (61) adhering to the filter (5) falls outside an acceptable range in a case where the total differential pressure ($\Delta P_{Total}$) is equal to or greater than the third threshold ($\beta 2$).

4. The rail vehicle air-conditioning apparatus (1) according to claim 3, wherein the air-conditioning control device is configured to:

further compare a filter differential pressure with a fourth threshold ($\beta 3$) in a case where the air-conditioning control device determines that the heat exchanger differential pressure ($\Delta P_{HEX}$) is equal to or greater than the second threshold ($\beta 1$), the filter differential pressure being a differential pressure obtained by subtracting the heat exchanger differential pressure ($\Delta P_{HEX}$) from a value of the total differential pressure ($\Delta P_{Total}$);
determine that the amount of the dust (61) adhering to the indoor-side heat exchanger (3) falls outside the acceptable range in a case where the filter differential pressure is smaller than the fourth threshold ($\beta 3$); and
determine that the amount of the dust (61) adhering to the indoor-side heat exchanger (3) and the filter (5) falls outside the acceptable range in a case where the filter differential pressure is equal to or greater than the fourth threshold ($\beta 3$).

5. The rail vehicle air-conditioning apparatus (1) according to claim 1, further comprising:

an outdoor filter installed on an upstream side of the outdoor-side heat exchanger (12) in an air flow direction;
an outdoor-side fan (13) configured to generate a flow of air flowing from the outdoor filter toward the outdoor-side heat exchanger (12);
a sixth sensor (36) configured to detect an air temperature and humidity upstream of the outdoor-side heat exchanger (12);
a seventh sensor (31) configured to detect an air temperature upstream of the indoor-side heat exchanger (3);
an eighth sensor (38) configured to detect a temperature of a refrigerant flowing into the outdoor-side heat exchanger (12);
a ninth sensor (33) configured to detect a temperature of a refrigerant flowing out of the indoor-side heat exchanger (3); and
an air-conditioning control device configured to receive, as input, signals from the sixth to ninth sensors (33), wherein the air-conditioning control device is configured to:
obtain an airflow rate feature (R) based on:

information (Teva) on the temperature of the refrigerant flowing into the outdoor-side heat exchanger (12);
information (Ta-in) on the air temperature upstream of the outdoor-side heat exchanger (12);
information (RHa-in) on the humidity upstream of the outdoor-side heat exchanger (12);
information (To-in) on the air temperature upstream of the indoor-side heat exchanger (3); and
information (Tsc) on the temperature of the refrigerant flowing out of the indoor-side heat exchanger (3); and
determine that there is a possibility that dust (61) adheres to at least one of the outdoor filter or the outdoor-side heat exchanger (12) in a case where the air-conditioning control device determines that the airflow rate feature (R) is smaller than a fifth threshold ($\alpha 2$).

6. The rail vehicle air-conditioning apparatus (1) according to claim 1, wherein

a first light sensor (39) configured to detect illuminance of light emitted from an inside of a vehicle is disposed between the filter (5) and the indoor-side heat exchanger (3), and a second light sensor (40) configured to detect illuminance of the light emitted from the inside of the vehicle is disposed between the indoor-side heat exchanger (3) and the indoor-side fan (4), and

the air-conditioning control device is configured to determine that an amount of dust (61) adhering to the indoor-side heat exchanger (3) or the filter (5) falls outside an acceptable range by monitoring the illuminance detected by the first light sensor (39) and the illuminance detected by the second light sensor (40) over time.

7. The rail vehicle air-conditioning apparatus (1) according to any one of claims 1 to 6, wherein the air-conditioning control device is configured to cause a display to display information on whether at least one of an amount of dust (61) adhering to the indoor-side heat exchanger (3) or the outdoor-side heat exchanger (12) and an amount of dust (61) adhering to the filter (5) or the outdoor filter falls within an acceptable range.

**Patentansprüche**

1. Schienenfahrzeug-Klimatisierungsvorrichtung (1), umfassend:

einen Kühlzyklus, in dem ein außenseitiger Wärmetauscher (12), ein Kompressor (21) und ein innenseitiger Wärmetauscher (3) durch ein Rohr verbunden sind und in dem ein Kühlmittel dazu geeignet ist, durch das Rohr zu strömen;
einen Filter (5), der auf einer Stromaufwärtsseite des innenseitigen Wärmetauschers (3) in eine Luftströmungsrichtung eingebaut ist; und
ein innenseitiges Gebläse (4), das dazu ausgelegt ist, eine Luftströmung zu erzeugen, die von dem Filter (5) in Richtung des innenseitigen Wärmetauschers (3) strömt;
**dadurch gekennzeichnet, dass** sie ferner Folgendes umfasst:

einen ersten Sensor (31), der dazu ausgelegt ist, eine Lufttemperatur und - feuchtigkeit stromaufwärts des innenseitigen Wärmetauschers (3) zu detektieren;
einen zweiten Sensor (36), der dazu ausgelegt ist, eine Lufttemperatur stromaufwärts des außenseitigen Wärmetauschers (12) zu detektieren;
einen dritten Sensor (33), der dazu ausgelegt ist, eine Temperatur eines Kühlmittels zu detektieren, welches in den innenseitigen Wärmetauscher (3) hineinströmt;
einen vierten Sensor (38), der dazu ausgelegt ist, eine Temperatur eines Kühlmittels zu detektieren, das aus dem außenseitigen Wärmetauscher (12) herausströmt; und
eine Klimatisierungssteuervorrichtung, die dazu ausgelegt ist, als Eingabe Signale von dem ersten bis zu dem vierten Sensor (38) zu empfangen,
wobei die Klimatisierungssteuervorrichtung für Folgendes ausgelegt ist:
Erhalten eines Luftströmungsratenmerkmals (R) basierend auf:

Informationen (Teva) über die Temperatur des Kühlmittels, das in den innenseitigen Wärmetauscher (3) hineinströmt;
Informationen (Ta-in) über die Lufttemperatur stromaufwärts des innenseitigen Wärmetauschers (3);
Informationen (RHa-in) über die Feuchtigkeit stromaufwärts des innenseitigen Wärmetauschers (3);
Informationen (To-in) über die Lufttemperatur stromaufwärts des außenseitigen Wärmetauschers (12); und
Informationen (Tsc) über die Temperatur des Kühlmittels, das aus dem außenseitigen Wärmetauscher (12) herausströmt; und
Bestimmen, dass die Möglichkeit besteht, dass Staub (61) auf zumindest einem aus dem Filter (5) oder dem innenseitigen Wärmetauscher (3) anhaftet, in einem Fall, dass die Klimatisierungssteuervorrichtung bestimmt, dass das Luftströmungsratenmerkmal (R) kleiner als ein erster Schwellenwert ($\alpha 1$) ist.

2. Schienenfahrzeug-Klimatisierungsvorrichtung (1) nach Anspruch 1, ferner umfassend:

einen fünften Sensor (34), der dazu ausgelegt ist, eine Luftdruckdifferenz zwischen einem Einlass und einem Auslass des innenseitigen Wärmetauschers (3) zu detektieren,
wobei die Klimatisierungssteuervorrichtung nach dem Empfangen eines Signals von dem fünften Sensor (34) als Eingabe für Folgendes ausgelegt ist:

anhand des Luftströmungsratenmerkmals (R) Schätzen einer aufgrund des Strömens durch den Filter (5) und den innenseitigen Wärmetauscher (3) verringerten Luftströmungsrate (Q2); und

Vergleichen eines Wärmetauscherdifferenzdrucks ($\Delta_{PHEX}$) mit einem zweiten Schwellenwert ($\beta$1), wobei der Wärmetauscherdifferenzdruck ($\Delta_{PHEX}$) ein Differenzdruck zwischen einem Referenzdruckverlust ($P_{HEX\_CAL}$) und einem gemessenen Differenzdruck ($P_{HEX\_EXP}$), der durch den fünften Sensor (34) erhalten wird, ist, wobei der Referenzdruckverlust ($P_{HEX\_CAL}$) einem Druckverlust an dem innenseitigen Wärmetauscher (3) entspricht, der bei der verringerten Luftströmungsrate (Q2) zusammen mit dem Hindurchströmen von Luft durch den innenseitigen Wärmetauscher (3) verursacht wird, wenn kein Staub (61) vorhanden ist, und Bestimmen, dass eine Menge an Staub (61), die an dem innenseitigen Wärmetauscher (3) anhaftet, in einen annehmbaren Bereich fällt, in einem Fall, dass die Klimatisierungssteuervorrichtung bestimmt, dass der Wärmetauscherdifferenzdruck ($\Delta_{PHEX}$) kleiner ist als ein zweiter Schwellenwert ($\beta$1).

3. Schienenfahrzeugklimatisierungsvorrichtung (1) nach Anspruch 2, wobei die Klimatisierungssteuervorrichtung für Folgendes ausgelegt ist:

Schätzen eines Gebläsedrucks ($P_{FAN\_2}$), welcher der verringerten Luftströmungsrate (Q2) entspricht, basierend auf der verringerten Luftströmungsrate (Q2) und einer Eigenschaft des innenseitigen Gebläses (4), und ferner Erhalten eines Gebläsedifferenzdrucks, der an dem innenseitigen Gebläse (4) erzeugt wird, basierend auf dem Gebläsedruck ($P_{FAN\_2}$),

Berechnen eines Gesamtdifferenzdrucks ($\Delta P_{Total}$), der durch Subtrahieren des Referenzdruckverlusts ($P_{HEX\_CAL}$) an dem innenseitigen Wärmetauscher (3) und eines Filterdruckverlusts ($P_{filter}$) von dem Gebläsedifferenzdruck ($P_{FAN\_2}$) erhalten wird;

Bestimmen, dass eine Menge an Staub (61), die an dem innenseitigen Wärmetauscher (3) und dem Filter (5) anhaftet, in einen annehmbaren Bereich fällt, in einem Fall, dass der Gesamtdifferenzdruck ($\Delta P_{Total}$) kleiner als ein dritter Schwellenwert ($\beta$2) ist; und

Bestimmen, dass eine Menge an Staub (61), die an dem Filter (5) anhaftet, außerhalb eines annehmbaren Bereichs fällt, in einem Fall, dass der Gesamtdifferenzdruck ($\Delta P_{Total}$) gleich dem oder größer als der dritte Schwellenwert ($\beta$2) ist.

4. Schienenfahrzeug-Klimatisierungsvorrichtung (1) nach Anspruch 3, wobei die Klimatisierungssteuervorrichtung für Folgendes ausgelegt ist:

weiteres Vergleichen eines Filterdifferenzdrucks mit einem vierten Schwellenwert ($\beta$2) in einem Fall, dass die Klimatisierungssteuervorrichtung bestimmt, dass der Wärmetauscherdifferenzdruck ($\Delta_{PHEX}$) gleich oder größer als der zweite Schwellenwert ($\beta$1) ist, wobei der Filterdifferenzdruck ein Differenzdruck ist, der durch Subtrahieren des Wärmetauscherdifferenzdrucks ($\Delta_{PHEX}$) von einem Wert des Gesamtdifferenzdrucks ($\Delta_{Total}$) erhalten wird;

Bestimmen, dass die Menge an Staub (61), die an dem innenseitigen Wärmetauscher (3) anhaftet, außerhalb des annehmbaren Bereichs fällt, in einem Fall, dass der Filterdifferenzdruck kleiner als der vierte Schwellenwert ($\beta$3) ist; und

Bestimmen, dass die Menge an Staub (61), die an dem innenseitigen Wärmetauscher (3) und dem Filter (5) anhaftet, außerhalb des annehmbaren Bereichs fällt, in einem Fall, dass der Filterdifferentialdruck gleich oder größer als der vierte Schwellenwert ($\beta$3) ist.

5. Schienenfahrzeug-Klimatisierungsvorrichtung (1) nach Anspruch 1, ferner umfassend:

einen Außenfilter, der auf einer Stromaufwärtsseite des außenseitigen Wärmetauschers (12) in einer Luftströmungsrichtung eingebaut ist;

ein außenseitiges Gebläse (13), das dazu ausgelegt ist, eine Luftströmung zu erzeugen, die von dem Außenfilter in Richtung des außenseitigen Wärmetauschers (12) strömt;

einen sechsten Sensor (36), der dazu ausgelegt ist, eine Lufttemperatur und - feuchtigkeit stromaufwärts des außenseitigen Wärmetauschers (12) zu detektieren;

einen siebten Sensor (31), der dazu ausgelegt ist, eine Lufttemperatur stromaufwärts des innenseitigen Wärmetauschers (3) zu detektieren;

einen achten Sensor (38), der dazu ausgelegt ist, eine Temperatur eines Kühlmittels, das in den außenseitigen Wärmetauscher (12) hineinströmt, zu detektieren;

einen neunten Sensor (33), der dazu ausgelegt ist, eine Temperatur eines Kühlmittels, das aus dem innenseitigen Wärmetauscher (3) herausströmt, zu detektieren; und
eine Klimatisierungssteuervorrichtung, die dazu ausgelegt ist, als Eingabe Signale von dem sechsten bis zu dem neunten Sensor (33) zu empfangen,
wobei die Klimatisierungssteuervorrichtung für Folgendes ausgelegt ist:
Erhalten eines Luftströmungsratenmerkmals (R) basierend auf:

Informationen (Teva) über die Temperatur des Kühlmittels, das in den außenseitigen Wärmetauscher (12) hineinströmt;
Informationen (Ta-in) über die Lufttemperatur stromaufwärts des außenseitigen Wärmetauschers (12);
Informationen (RHa-in) über die Feuchtigkeit stromaufwärts des außenseitigen Wärmetauschers (12);
Informationen (To-in) über die Lufttemperatur stromaufwärts des innenseitigen Wärmetauschers (3); und
Informationen (Tsc) über die Temperatur des Kühlmittels, das aus dem innenseitigen Wärmetauscher (3) herausströmt; und
Bestimmen, dass die Möglichkeit besteht, dass Staub (61) auf zumindest einem aus dem Außenfilter oder dem außenseitigen Wärmetauscher (12) anhaftet, in einem Fall, dass die Klimatisierungssteuervorrichtung bestimmt, dass das Luftströmungsratenmerkmal (R) kleiner als ein fünfter Schwellenwert ($\alpha2$) ist.

6. Schienenfahrzeug-Klimatisierungsvorrichtung (1) nach Anspruch 1, wobei

ein erster Lichtsensor (39), der dazu ausgelegt ist, die Beleuchtungsstärke von Licht, das von einem Inneren eines Fahrzeugs emittiert wird, zu detektieren, zwischen dem Filter (5) und dem innenseitigen Wärmetauscher (3) angeordnet ist, und ein zweiter Lichtsensor (40), der dazu ausgelegt ist, die Beleuchtungsstärke des Lichts, das von dem Inneren des Fahrzeugs emittiert wird, zu detektieren, zwischen dem innenseitigen Wärmetauscher (3) und dem innenseitigen Gebläse (4) angeordnet ist, und wobei
die Klimatisierungssteuervorrichtung dazu ausgelegt ist, zu bestimmen, dass eine Menge an Staub (61), die an dem innenseitigen Wärmetauscher (3) oder dem Filter (5) anhaftet, außerhalb eines annehmbaren Bereichs fällt, indem sie die durch den ersten Sensor (39) detektierte Beleuchtungsstärke und die durch den zweiten Sensor (40) detektierte Beleuchtungsstärke über der Zeit überwacht.

7. Schienenfahrzeug-Klimatisierungsvorrichtung (1) nach einem der Ansprüche 1 bis 6, wobei die Klimatisierungssteuervorrichtung dazu ausgelegt ist, Anzeige-zu-Anzeige-Informationen darüber zu erzeugen, ob zumindest eines aus einer Menge an Staub (61), die an dem innenseitigen Wärmetauscher (3) oder dem außenseitigen Wärmetauscher (12) anhaftet, oder einer Menge an Staub (61), die an dem Filter (5) oder dem Außenfilter anhaftet, in einen annehmbaren Bereich fällt.

**Revendications**

1. Appareil de climatisation de véhicule ferroviaire (1), comprenant :

un cycle de réfrigération dans lequel un échangeur de chaleur côté extérieur (12), un compresseur (21) et un échangeur de chaleur côté intérieur (3) sont reliés par un tuyau, et dans lequel un fluide frigorigène est adapté pour passer à travers le tuyau ;
un filtre (5) installé sur un côté amont de l'échangeur de chaleur côté intérieur (3) dans une direction d'écoulement d'air ; et un ventilateur côté intérieur (4) configuré pour générer un écoulement d'air s'écoulant du filtre (5) vers l'échangeur de chaleur côté intérieur (3) ;
**caractérisé en ce qu'**il comprend en outre :

un premier capteur (31) configuré pour détecter une température et une humidité de l'air en amont de l'échangeur de chaleur côté intérieur (3) ;
un deuxième capteur (36) configuré pour détecter une température d'air en amont de l'échangeur de chaleur côté extérieur (12) ;
un troisième capteur (33) configuré pour détecter une température d'un fluide frigorigène s'écoulant dans l'échangeur de chaleur côté intérieur (3) ;
un quatrième capteur (38) configuré pour détecter une température d'un fluide frigorigène s'écoulant hors de l'échangeur de chaleur côté extérieur (12) ; et
un dispositif de commande de climatisation configuré pour recevoir, en tant qu'entrée, des signaux provenant des premier à quatrième capteurs (38),

dans lequel le dispositif de commande de climatisation est configuré pour :

obtenir une caractéristique de débit d'écoulement d'air (R) sur la base :

d'informations (Teva) sur la température du fluide frigorigène s'écoulant dans l'échangeur de chaleur côté intérieur (3) ;

d'informations (Ta-in) sur la température d'air en amont de l'échangeur de chaleur côté intérieur (3) ;

d'informations (RHa-in) sur l'humidité en amont de l'échangeur de chaleur côté intérieur (3) ;

d'informations (To-in) sur la température d'air en amont de l'échangeur de chaleur côté extérieur (12) ; et

d'informations (Tsc) sur la température du fluide frigorigène s'écoulant hors de l'échangeur de chaleur côté extérieur (12) ; et

déterminer qu'il existe une possibilité que de la poussière (61) adhère à au moins l'un du filtre (5) ou de l'échangeur de chaleur côté intérieur (3) dans un cas dans lequel le dispositif de commande de climatisation détermine que la caractéristique de débit d'écoulement d'air (R) est inférieure à un premier seuil ($\alpha$1).

2.  Appareil de climatisation de véhicule ferroviaire (1) selon la revendication 1, comprenant en outre :

un cinquième capteur (34) configuré pour détecter une différence de pression d'air entre une entrée et une sortie de l'échangeur de chaleur côté intérieur (3),

dans lequel le dispositif de commande de climatisation ayant reçu, en tant qu'entrée, un signal en provenance du cinquième capteur (34) est configuré pour :

estimer, à partir de la caractéristique de débit d'écoulement d'air (R), un débit d'écoulement d'air (Q2) diminué en raison d'un passage à travers le filtre (5) et l'échangeur de chaleur côté intérieur (3) ; et

comparer une pression différentielle d'échangeur de chaleur ($\Delta P_{HEX}$) avec un deuxième seuil ($\beta$1), la pression différentielle d'échangeur de chaleur ($\Delta P_{HEX}$) étant une pression différentielle entre une perte de pression de référence ($P_{HEX\_CAL}$) et une pression différentielle mesurée ($P_{HEX\_EXP}$) qui est obtenue par le cinquième capteur (34), la perte de pression de référence ($P_{HEX\_CAL}$) correspondant à une perte de pression au niveau de l'échangeur de chaleur côté intérieur (3) provoquée avec le passage d'air à travers l'échangeur de chaleur côté intérieur (3) lorsqu'il n'y a pas de poussière (61) au débit d'écoulement d'air réduit (Q2), et déterminer qu'une quantité de poussière (61) adhérant à l'échangeur de chaleur côté intérieur (3) tombe dans une plage acceptable dans un cas dans lequel le dispositif de commande de climatisation détermine que la pression différentielle d'échangeur de chaleur ($\Delta P_{HEX}$) est inférieure au deuxième seuil ($\beta$1).

3.  Appareil de climatisation de véhicule ferroviaire (1) selon la revendication 2, dans lequel le dispositif de commande de climatisation est configuré pour :

estimer une pression de ventilateur ($P_{FAN\_2}$) correspondant au débit d'écoulement d'air réduit (Q2) sur la base du débit d'écoulement d'air réduit (Q2) et d'une caractéristique du ventilateur côté intérieur (4), et obtenir en outre une pression différentielle de ventilateur générée à travers le ventilateur côté intérieur (4) sur la base de la pression de ventilateur ($P_{FAN\_2}$) ;

calculer une pression différentielle totale ($\Delta P_{Total}$) obtenue en soustrayant la perte de pression de référence ($P_{HEX\_CAL}$) au niveau de l'échangeur de chaleur côté intérieur (3) et une perte de pression de filtre ($P_{filter}$) de la pression différentielle de ventilateur ($P_{FAN\_2}$) ;

déterminer qu'une quantité de poussière 61 adhérant à l'échangeur de chaleur côté intérieur (3) et au filtre (5) tombe dans une plage acceptable dans un cas dans lequel la pression différentielle totale ($\Delta P_{Total}$) est inférieure à un troisième seuil ($\beta$2) ; et

déterminer qu'une quantité de poussière (61) adhérant au filtre (5) tombe en dehors d'une plage acceptable dans un cas dans lequel la pression différentielle totale ($\Delta P_{Total}$) est égale ou supérieure au troisième seuil ($\beta$2).

4.  Appareil de climatisation de véhicule ferroviaire (1) selon la revendication 3, dans lequel le dispositif de commande de climatisation est configuré pour :

comparer en outre une pression différentielle de filtre avec un quatrième seuil (33) dans un cas dans lequel le dispositif de commande de climatisation détermine que la pression différentielle d'échangeur de chaleur ($\Delta P_{HEX}$) est égale ou supérieure au deuxième seuil (31), la pression différentielle de filtre étant une pression différentielle obtenue en soustrayant la pression différentielle d'échangeur de chaleur ($\Delta P_{HEX}$) d'une valeur de la pression

différentielle totale ($\Delta P_{Total}$) ;
déterminer que la quantité de poussière (61) adhérant à l'échangeur de chaleur côté intérieur (3) tombe en dehors de la plage acceptable dans un cas dans lequel la pression différentielle de filtre est inférieure au quatrième seuil ($\beta 3$) ; et
déterminer que la quantité de poussière (61) adhérant à l'échangeur de chaleur côté intérieur (3) et au filtre (5) tombe en dehors d'une plage acceptable dans un cas dans lequel la pression différentielle de filtre est égale ou supérieure au quatrième seuil ($\beta 3$).

5. Appareil de climatisation de véhicule ferroviaire (1) selon la revendication 1, comprenant en outre :

un filtre extérieur installé sur un côté amont de l'échangeur de chaleur côté extérieur (12) dans une direction d'écoulement d'air ;
un ventilateur côté extérieur (13) configuré pour générer un écoulement d'air s'écoulant du filtre extérieur vers l'échangeur de chaleur côté extérieur (12) ;
un sixième capteur (36) configuré pour détecter une température et une humidité d'air en amont de l'échangeur de chaleur côté extérieur (12) ;
un septième capteur (31) configuré pour détecter une température d'air en amont de l'échangeur de chaleur côté intérieur (3) ;
un huitième capteur (38) configuré pour détecter une température d'un fluide frigorigène s'écoulant dans l'échangeur de chaleur côté extérieur (12) ;
un neuvième capteur (33) configuré pour détecter une température d'un fluide frigorigène s'écoulant hors de l'échangeur de chaleur côté intérieur (3) ; et
un dispositif de commande de climatisation configuré pour recevoir, en tant qu'entrée, des signaux provenant des sixième à neuvième capteurs (33),
dans lequel le dispositif de commande de climatisation est configuré pour :
obtenir une caractéristique de débit d'écoulement d'air (R) sur la base :

d'informations (Teva) sur la température du fluide frigorigène s'écoulant dans l'échangeur de chaleur côté extérieur (12) ;
d'informations (Ta-in) sur la température d'air en amont de l'échangeur de chaleur côté extérieur (12) ;
d'informations (RHa-in) sur l'humidité en amont de l'échangeur de chaleur côté extérieur (12) ;
d'informations (To-in) sur la température d'air en amont de l'échangeur de chaleur côté intérieur (3) ; et
d'informations (Tsc) sur la température du fluide frigorigène s'écoulant hors de l'échangeur de chaleur côté intérieur (3) ; et
déterminer qu'il existe une possibilité que de la poussière (61) adhère à au moins l'un du filtre extérieur ou de l'échangeur de chaleur côté extérieur (12) dans un cas dans lequel le dispositif de commande de climatisation détermine que la caractéristique de débit d'écoulement d'air (R) est inférieure à un cinquième seuil ($\alpha 2$).

6. Appareil de climatisation de véhicule ferroviaire (1) selon la revendication 1, dans lequel

un premier capteur de lumière (39) configuré pour détecter l'éclairement de la lumière émise depuis l'intérieur d'un véhicule est disposé entre le filtre (5) et l'échangeur de chaleur côté intérieur (3), et un second capteur de lumière (40) configuré pour détecter l'éclairement de la lumière émise depuis l'intérieur du véhicule est disposé entre l'échangeur de chaleur côté intérieur (3) et le ventilateur côté intérieur (4), et
le dispositif de commande de climatisation est configuré pour déterminer qu'une quantité de poussière (61) adhérant à l'échangeur de chaleur côté intérieur (3) ou au filtre (5) tombe en dehors d'une plage acceptable en surveillant l'éclairement détecté par le premier capteur de lumière (39) et l'éclairement détecté par le second capteur de lumière (40) au fil du temps.

7. Appareil de climatisation de véhicule ferroviaire (1) selon l'une quelconque des revendications 1 à 6, dans lequel le dispositif de commande de climatisation est configuré pour amener un affichage à afficher des informations sur le fait qu'au moins l'une d'une quantité de poussière (61) adhérant à l'échangeur de chaleur côté intérieur (3) ou à l'échangeur de chaleur côté extérieur (12) et d'une quantité de poussière (61) adhérant au filtre (5) ou au filtre extérieur tombe dans une plage acceptable.

# FIG. 1

⇨ : FLOW OF AIR

# FIG. 2

# FIG. 3

⇨ : FLOW OF AIR

→ : FLOW OF REFRIGERANT

# FIG. 4

⇨ : FLOW OF AIR

# FIG. 5

⇨ : FLOW OF AIR

# FIG. 6

⇨ : FLOW OF AIR

# FIG. 7

START

S01 — START COOLING OPERATION

S02 — CALCULATE AIRFLOW RATE FEATURE $R$

S03 — AIRFLOW RATE FEATURE $R$ < THRESHOLD $\alpha 1$

Yes

No

S06

- DETECT DECREASE IN AIRFLOW RATE AND ESTIMATE AIRFLOW RATE AFTER DECREASE: $Q_2$
- ESTIMATE PRESSURE LOSS AT DUST-FREE FILTER AT DECREASED AIRFLOW RATE: $P_{filter}$
- ESTIMATE PRESSURE LOSS AT DUST-FREE HEAT EXCHANGER AT DECREASED AIRFLOW RATE (CONSIDERING DEW CONDENSATION): $P_{HEX\_CAL}$
- MEASURED VALUE OF PRESSURE LOSS AT HEAT EXCHANGER: $P_{HEX\_EXP}$
- DIFFERENCE BETWEEN CALCULATION AND ACTUAL MEASUREMENT OF PRESSURE LOSS AT HEAT EXCHANGER: $\Delta P_{HEX} = P_{HEX\_EXP} - P_{HEX\_CAL}$
- ESTIMATE INCREASED PRESSURE AMOUNT OBTAINED WHEN DECREASE IN AIRFLOW RATE OCCURS, FROM FAN CHARACTERISTICS: $P_{FAN\_2}$
- CALCULATE DIFFERENCE BETWEEN INCREASED PRESSURE AMOUNT AND PRESSURE LOSSES AT DUST-FREE FILTER AND HEAT EXCHANGER: $\Delta P_{Total} = P_{FAN\_2} - P_{filter} - P_{HEX\_CAL}$

IS HEAT EXCHANGER FREE OF DUST?

Yes = FREE OF DUST        $\Delta P_{HEX} < \beta 1$        No = DUST IS PRESENT

IS FACTOR THAT CAUSES DECREASE IN AIRFLOW RATE BASED ON ONLY DEW CONDENSATION?

S07 — $\Delta P_{Total} < \beta 2$

S08

IS FACTOR THAT CAUSES DECREASE IN AIRFLOW RATE PRESENT IN ONLY HEAT EXCHANGER?

Yes

No

S10 — $\Delta P_{Total} - \Delta P_{HEX} < \beta 3$

No

Yes

S04 — DISPLAY INDICATION THAT IT IS DETERMINED TO BE NORMAL

S09 — DISPLAY INDICATION THAT CLEANING OF FILTER IS NECESSARY

S11 — DISPLAY INDICATION THAT CLEANING OF HEAT EXCHANGER AND FILTER IS NECESSARY

S12 — DISPLAY INDICATION THAT CLEANING OF HEAT EXCHANGER IS NECESSARY

S05 — IS COOLING OPERATION OFF?

No

Yes

END

# FIG. 8

# FIG. 9

⇨ : FLOW OF AIR

→ : FLOW OF REFRIGERANT

# FIG. 10

⇨ : FLOW OF AIR

→ : FLOW OF REFRIGERANT

# FIG. 11

⇨ : FLOW OF AIR

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021156469 A
- JP 5787604 B

- JP 2012126351 A